(19) Europäisches Patentamt
European Patent Office
Office européen des brevets

(11) Publication number: **0 645 685 A2**

(12) # EUROPEAN PATENT APPLICATION

(21) Application number: **94117872.5**

(51) Int. Cl.$^6$: **G05B 19/418**

(22) Date of filing: **14.08.90**

This application was filed on 11 - 11 - 1994 as a divisional application to the application mentioned under INID code 60.

(30) Priority: **31.08.89 JP 224939/89**
**31.08.89 JP 224940/89**
**29.01.90 JP 6149/90 U**
**05.03.90 JP 52990/90**
**10.04.90 JP 94339/90**
**09.05.90 JP 47643/90 U**

(43) Date of publication of application:
**29.03.95 Bulletin 95/13**

(60) Publication number of the earlier application in accordance with Art.76 EPC: **0 416 331**

(84) Designated Contracting States:
**DE FR GB NL**

(71) Applicant: **Yokogawa Electric Corporation**
**9-32, Nakacho 2-chome**
**Musashino-shi**
**Tokyo 180 (JP)**

(72) Inventor: **Tairaku, Hirokazu**
**1227-4, Hatuzawacho**
**Hachioji-shi,**
**Tokyo (JP)**
Inventor: **Inoue, Kenichi**
**4-11-6, Atago**
**Tama-shi,**
**Tokyo (JP)**
Inventor: **Ito, Chiaki**
**2-31-13, Honmachi**
**Fuchu-shi,**
**Tokyo (JP)**
Inventor: **Takimoto, Kenji**
**2-21-2, Fuchucho**
**Fuchu-shi,**
**Tokyo (JP)**
Inventor: **Tanido, Shigetoshi**
**4-11-40, Yahara**
**Nerima-ku,**
**Tokyo (JP)**

(74) Representative: **Henkel, Feiler, Hänzel & Partner**
**Möhlstrasse 37**
**D-81675 München (DE)**

(54) **Method of controlling a line computer for implementing a relocated compiled library program.**

(57) The present invention relates to a method of controlling a line computer for implementing a relocated compiled library program (C library) with an interpreter type language program (BASIC interpreter BSI) to control a line computer. In this method, in a user area (A) of a main memory (MM) BASIC middle word area (A1) is set in order to store the middle word of said interpreter type language program (BASIC interpreter BSI), and a main processor (102) executes separately, said compiled library (C library) and said middle word of the interpreter type language program (BASIC interpreter BSI). In the C library area (A2) in said user area (A) said compiled library program (C library) is stored, wherein (a) adapting steps are set at an adapter area (A21), which is at the top of said C library area (A2), in which respective arguments in said interpreter type language (BASIC interpreter BSI) are stored, and which call main function in said compiled library program (C library), (b) a data area (A25) is set at the rear of said C library area (A2), which stores the initial data of static variable to be used in the execution of the main function in said compiled library program (C library), and (c) an address converting table (A26) is set at the final portion of the main function. Further, a relative address (X) between the top address of said compiled library program (C library) and the position dependent code address, and relative address (Y) between the top address of said compiled library address and the branch des-



Rank Xerox (UK) Business Services
(3.10/3.09/3.3.4)

tination address indicated in said position dependent code, are set as a pair. When said system starts and said interpreter type language program (BASIC interpreter BSI) is executed, (a) said initial data in said data area (A25) is copied into said main function in said compiled library program (C library), (b) said branch destination address in said main function in said compiled library program (C library) is changed, by use of said address converting table (A26), in compliance with said top address of said C library area (A2), and (c) when said compiled library program (C library) is called as a subroutine, said adapting steps start and said main function in said compiled library program (C library) is executed after the arguments in said interpreter language type program (BASIC interpreter) being piled in a stack in said main processor (102).

Fig.6

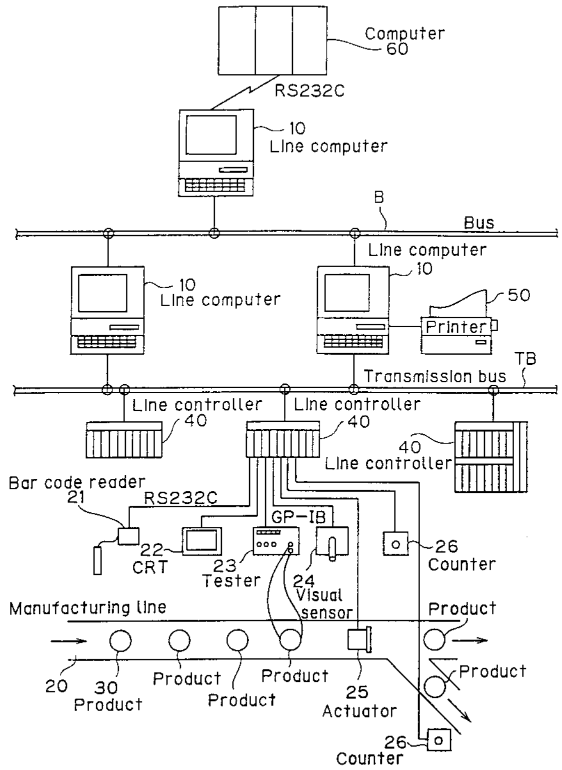

## BACKGROUND OF THE INVENTION

### Field of Invention

This invention relates to a method of controlling a line computer for implementing a relocated compiled library program.

### Description of the Prior Art

Prior art document US-A-4 870 590 discloses a manufacturing line control system which uses line computers.

In the first place, the configuration of peripheral circuits around a CPU board of the line computer is explained.

Fig. 1 shows a main part of the conventional line computer system, in which such a high speed CPU as 68020 or 68030 which works at 25 MHz clock or 33MHz clock is used, together with I/O devices which work at low speed.

In this figure, CPU 1 is connected to a main memory block 2 and low speed I/O devices 31 and 32 through data bus DB, address bus AB and other signal lines. Address signal ADR, read/write signal R/$\overline{W}$, address strobe signal $\overline{AS}$, and data strobe signal $\overline{DS}$ are input to a decoder 4 from CPU 1. From decoder 4, chip select signals $\overline{CS1}$ and $\overline{CS2}$ are output to I/O devices 31 and 32. Further, data strobe acknowledge signals DSACK, DSACK1, and DSACK2 are transmitted to a single signal line from respective blocks every time when these blocks transmit or receive the data.

Fig. 2 is a time chart showing operation of the above system. Assuming that CPU 1 has started read cycle for I/O device 31, address ADR, address strobe signal $\overline{AS}$(L), and data strobe signal $\overline{DS}$(L) are transmitted from CPU 1. Decoder 4 interprets these signals and then sends chip select signal $\overline{CS1}$(L) to I/O device 31. In response to this, I/O device 31 transmits read data corresponding to address ADR, to data bus DB. CPU 1 introduces this read data in accordance with data strobe acknowledge signal $\overline{DSACK1}$(L). Read cycle ends by this operation.

Next, assuming that CPU 1 has started write cycle for I/O device 32, address strobe signal $\overline{AS}$(L) is transmitted from CPU1. A little later, data strobe signal $\overline{DS}$(L) is transmitted. Decoder 4 interprets and then sends chip select signal $\overline{CS2}$(L) to I/O device 32.

On the other hand, CPU 1 transmits write data to data bus DB. After introducing this write data, I/O device 32 functions to change data strobe acknowledge signal $\overline{DSACK2}$ to "L" state. Write cycle ends by this operation.

The system shown in this figure repeats the read cycle and the write cycle as mentioned in the above. However, the above mentioned conventional system has the following problems.

(1) In the conventional system, address strobe signal $\overline{AS}$(L) is asserted immediately after the cycle starts, and negated immediately before the cycle ends. Therefore, both set time t1 and hold time t2 of address ADR are too short for the low speed I/O devices to secure reliable function, and therefore, for these low speed I/O devices, process time is not enough.

(2) In the conventional system, while the last data strobe acknowledge signal $\overline{DSACK1}$ does not change to high impedance, the next data strobe acknowledge signal $\overline{DSACK2}$ becomes active (L). In this occasion, signal collision having collision time t3 occurs on the same line.

(3) In the conventional system, occasionally, write cycle is executed immediately after read cycle. In this case, if the write data were sent to data bus DB from CPU 1 when the last time read data exists in the same data bus, data collision occurs between these two data during time t4.

(4) Since data strobe signal $\overline{DS}$(L) is canceled immediately before the end of write cycle, hold time t5 of write data is not enough for the low-speed I/O device.

## SUMMARY OF THE INVENTION

It is an object of the invention to overcome the aforementioned drawbacks of prior art and to provide a method of controlling the line computer suitable for generating a bus timing having enough time margin and using a high speed CPU and low-speed I/O devices.

To solve this object the present invention provides a method for controlling such line computer as specified in claim 1.

## BRIEF DESCRIPTION OF DRAWINGS

Fig 1 is a block diagram showing a main part of the conventional line computer.

Fig. 2 is a time chart showing function of the apparatus shown in Fig. 1.

Fig. 3 is a block diagram showing a main part of a present line computer in accordance with the parent patent.

Fig. 4 is a time chart showing function of the present line computer.

Fig. 5 is a block diagram showing a main part of other present line computer of the parent patent.

Fig. 6 is a diagram showing a total system wherein the present line computer is used in a manufacturing line control system.

Fig. 7 is a block diagram showing a CPU board of the present line computer.

Fig. 8 is a part of diagram showing circuit configuration of a calendar clock used in the present line computer.

Figs. 9 and 10 are time charts showing function of the calendar clock shown in Fig. 8.

Fig. 11 is a block diagram showing structure of a character display control part used in the present line computer.

Fig. 12 is a time chart showing function of the character display control part shown in Fig. 11.

Fig. 13 is a schematic diagram showing connection of the I/O board installed in the present line computer.

Fig. 14 is a schematic diagram showing hardware concept of the I/O board installed in the present line computer.

Fig. 15 is a schematic diagram showing software concept of the I/O board installed in the present line computer.

Fig. 16 is a schematic diagram showing connection of floppy disk drives installed in the present line computer.

Fig. 17 is a diagram showing allocation of software programs in user memory area when different language programs are loaded in the present line computer.

Figs. 18 and 19 are explanatory diagrams showing function for converting C library.

Fig. 20 is a flow chart showing function of the system by the invention when compiler type language is loaded.

## DETAILED DESCRIPTION OF PREFERRED EMBODIMENTS

Fig. 3 shows a block diagram of a bus timing adjusting circuit 5.

Structural feature of this bus timing adjusting circuit is that in place of a decoder installed in a conventional apparatus, buffer 5b and control circuit 5c are provided.

Buffer 5b is provided so as to divide data bus DB connecting I/O devices 31 and 32. SData represents data transferred between buffer 5b and CPU 1. PData represents data transferred between buffer 5b and I/O devices 31, 32. By the existence of buffer 5b, collision of these data does not occur on data bus DB. Control circuit 5c receives address strobe signal $\overline{AS}$($\overline{SAS}$)(L) and data strobe signal $\overline{DS}$($\overline{SDS}$)(L) applied from CPU 1, and functions to delay these signals. Further, control circuit 5c sends these signals as chip select signals $\overline{PCS1}$, $\overline{PCS2}$($\overline{CS1}$, $\overline{CS2}$)(L) to I/O devices 31 and 32. Transmission of chip select signals $\overline{PCS1}$, $\overline{PCS2}$(L) is prohibited a fixed time faster than the time when address strobe signal $\overline{AS}$ and data strobe signal $\overline{DS}$ are negated. Read/write signal R/$\overline{W}$ is also inputted to control circuit 5c. When CPU 1 starts write cycle, control circuit 5c generates buffer enable signal $\overline{BUFEN}$ to buffer 5b in accordance with address strobe signals $\overline{AS}$(L) and data strobe signal $\overline{DS}$(L). When CPU 1 starts read cycle, control circuit 5c generates buffer enable signal $\overline{BUFEN}$, and latch timing signal $\overline{BUFCK}$ for latching the data from I/O devices 31 and 32.

Namely, based upon buffer enable signal BUFEN and read/write signal R/$\overline{W}$ (DIR signal), side of data bus DB where data in buffer 5b shall be transmitted is decided.

Further, control circuit 5c receives data strobe acknowledge signal $\overline{PDSACK}$ ($\overline{DSACK1}$, $\overline{DSACK2}$), and sends data acknowledge signal $\overline{SDSACK}$ to CPU 1. Further, buffer 5b receives read/write signal R/$\overline{W}$, and uses this signal as DIR signal to decide inputting or outputting direction of buffer 5b. For instance, IC 74646 is used as buffer 5b, and a logic circuit is used control circuit 5c for setting the above logic.

Fig. 4 is a time chart showing function of bus timing adjusting circuit 5. Assuming that CPU 1 starts read cycle, CPU 1 transmits address ADR and read/write signal R/$\overline{W}$ (H), and asserts address strobe signal $\overline{AS}$($\overline{SAS}$)(L) and data strobe signal $\overline{DS}$($\overline{SDS}$)(L). At this time, I/O direction DIR of buffer 5b is in H state. Control circuit 5c functions so as to delay both address strobe signal $\overline{SAS}$(L) and data strobe signal $\overline{SDS}$(L) by time t1', and generates internal address strobe signal $\overline{PAS}$(L) and internal address strobe signal $\overline{PDS}$(L). And control circuit 5b sends chip select signal $\overline{PSC1}$(L) or $\overline{PSC2}$(L) to I/O device 31 or 32 in accordance with value of address ADR.

Thus, read data PData is transmitted to data bus DB from a specified I/O device in correspondence to address ADR. And at the same time, data strobe acknowledge signal $\overline{PDSACK}$($\overline{DSACK1}$ or $\overline{DSACK2}$)(L) is transmitted from the I/O device.

Further, control circuit 5c sends latch timing signal $\overline{BUFCK}$(H) to buffer 5b so as to store read data PData in buffer 5b. At this time, control circuit 5a functions to prohibit internal address strobe signal $\overline{PAS}$(L), internal data strobe signal $\overline{PDS}$(L), and chip select signal $\overline{PCS1}$(L).

Later, control circuit 5b functions, to buffer 5b, to enable timing signal $\overline{BUFEN}$ (L) for necessary period. Thus, read data SData is transmitted to data bus DB on the CPU side. Then, control circuit 5c transmits data strobe acknowledge signal $\overline{SDSACK}$(L). Based upon this signal, CPU 1 introduces data SData and read cycle ends by this operation.

Meanwhile, assuming that CPU 1 starts write cycle, CPU 1 asserts address ADR, read/write signal R/$\overline{W}$(L), address strobe signal $\overline{SAS}$(L), and a little later, data strobe signal $\overline{SDS}$ (L). Then, CPU 1 transmits write data SData. Control circuit 5c functions so as to delay address strobe signal SAS(L) and data strobe signal SDS(L), and generates internal address strobe signal PAS(L) and internal data strobe signal PDS(L) in the same manner as in the above read cycle. And control circuit 5b sends chip select signal PSC1(L) or PSC2(L) to I/O device 31 or 32 in accordance with the value of address ADR. By the existence of the above delay time, the state of signal line PDSACK becomes high impedance (time t3'). At this time, I/O direction DIR of buffer 5b is made L state by read/write signal R/W.

Then, control circuit 5c transmits enable signal BUFEN (L) to buffer 5b, which causes write data SData to pass through the inside of buffer 5b. Thus, control circuit 5c function to transmit write data PData to data bus DB on the I/O device side.

The I/O device sends back data strobe acknowledge signal PDSACK(L), after it introduces write data PData.

Then, control circuit 5c negates internal address strobe signal PAS(L), internal data strobe signal PDS(L), and chip select signal PCS1(L) or PCS2(L). Further, control circuit 5c negates buffer enable signal BUFEN(L), and asserts data strobe acknowledge signal SDSACK(L) to CPU 1.

As the result of this, CPU 1 negates address strobe signal SAS(L), data strobe signal SDS(L), and further, data strobe acknowledge signal SDSACK(L). And write cycle ends by this operation.

As described in the above, control circuit 5c functions to delay transmission of address strobe signal SAS(L) and data strobe signal SDS(L) from CPU 1 so as to generate chip select signal PCS1-(L) or PCS2(L), and further, prohibits transmission of internal data strobe signal PDS(L) and chip select signal PCS1(L) or PCS2(L) before address strobe signal SAS(L) and data strobe signal SDS(L) from CPU 1 are negated. Therefore, this invention has following advantages:

(1) Sufficient time can take for set time t1 and hold time t2 of address ADR.

(2) After the last time transmission of data strobe acknowledge signal PDSACK(L) ends, sufficient time t3' is maintained in high impedance state.

(3) In the write cycle, enough hold time t5'can be taken for write data PData.

Further, since buffer 5b is arranged between CPU 1 and I/O devices 31 and 32, so as to separate both data transmitted from CPU 1 and I/O devices 31 and 32, such disadvantage can be avoided, that the data in the previous cycle and the data in the present cycle collide on data bus DB. Namely, high impedance state shown by time t4' is guaranteed.

Fig. 5 shows one example in which bus timing adjusting circuits 51 and 52 are applied to a system provided with cache memory. In this example, the first bus timing adjusting circuit 51 is provided between high speed bus B1' side where CPU 1 and cache memory 6 are connected and intermediate speed bus B2' side where main memory block 2 is connected, and the second bus timing adjusting circuit 52 is provided between intermediate speed bus B2' side and low speed bus B3' side where I/O device 3 and ROM 7 are connected.

The first and second bus timing adjustment circuits 51 and 52 have similar configuration to the circuit shown in Fig. 3, function similarly. Accordingly, CPU 1 can access to each block at a optimum speed.

In accordance with this embodiment, as for the high speed bus B1' side, CPU 1 can function at high speed and therefore, its maximum performance can be obtained. On the other hand, as for the low speed bus B3' side, low speed I/O device 3 can function at low speed and therefore, its certain operation can be secured. Accordingly, a system with highly excellent cost performance can be configured.

Turning now to Fig. 6, a line computer 10 is connected to a transmission bus TB to which a line controller 40 is connected. Computer 10 performs various processing functions with respect to products 30 passing through manufacturing line 20.

Computer 10 gathers data from line controller 40 and sends instructions thereto. Computer 10 also outputs data from line controller 40, if desired for booking through a printer 50. Computer 10, connected to bus B, is disposed at, for example, a central control room, and can communicate with other line computers 10, with the host side intermediate or large scale computer 60 for sending information as to the state of the manufacturing line 20 by way of ordinary transmission standard signal line, such as RS232C.

Controller 40 directly controls the operations of a bar code reader 21, which reads out, through RS232C, a product code of product 30 passing through manufacturing line 20, i.e. an automatic inspection line; CRT 22 which displays output results; a tester 23, such as an electrical voltage tester, for testing an operation of product 30 through GP-IB line; a visual sensor 24 for external appearance test; an actuator 25 for selecting good or inferior products in response to output signal from visual sensor 24; and a counter 26 for counting the good or inferior product.

The line computer has a CPU board in which such a bus timing adjusting circuit is installed.

Fig. 7 is a block diagram showing such CPU board 100.

In this example, the above mentioned bus timing adjusting circuit is used as 32/16 bit converter 101. To 32 bit high speed bus B1, main processor 102 (68020, 68030) which operates at high speed, memory controller 103 for controlling main memory MM, DMA controller 104, VME-bus controller 105 and peripheral controller 106 are connected. DMA controller 104 controls data transmission from main memory MM to SCSI controller 107 provided with hard disks or FDD controller 108 provided with floppy disks, and vice versa. VME-bus controller 105 controls optional communication I/O boards c1, c2 ... cn connected to VME-bus B2. These optional I/O boards c1, c2 ... cn are used for BSC communication, Ethernet communication, GP-IB communication, or MAP communication.

Peripheral controller 106 is connected to 8 bit bus B3, to which ROM 109, slave processor 110, and communication controller 111 are connected. Communication controller 111 functions as an interface for printer 50, key board KB, and such a transmission line as RS232C.

Slave processor 110 is provided with calendar-clock 112 which has such function as calendar function, clock function, or interruption function for interrupting to the software timer. Further, slave processor 110 functions to process signals applied from abnormality detecting means 113 for detecting abnormality of cooling fans or abnormal temperature rise. Further more, slave processor 110 carries out processing of key board inputs applied through communication controller 111, serial communication processing (RS232C), or controlling of printer 50 in accordance with printer drive instructions.

For the sake of operation by slave processor 10, load of main processor 102 is reduced considerably, and thus, main processor 102 can work smoothly.

On the other hand, 32/16 bit converter 101 functions to connect 16 bit bus B4 to which low speed I/O devices are connected, with high speed 32 bit bus B1. In this example, ROM 114 (128KB), communication interface 115, graphic controller 116, CRT displaying controller 117 are provided in 16 bit bus B4. To CRT displaying controller 117, display memory 118 is connected, graphic controller 116, CRT displaying controller 117 and display memory 118 compose a block for controlling CRT display.

As indicated in the above, 32/16 bit converter 101 adjusts operation timing of high speed main processor 102 and operation timing of low speed I/O devices, thereby to make sufficient time margin.

Interruption function to the software timer is carried out to reduce time error in calendar-clock 112 provided in slave processor 110.

In the conventional structure, separate clock generators are used for generating a real time clock for CPU and for generating a standard clock to run software program. In the conventional structure, when electricity is turned on, the present time is calculated by adding a value counted by the software timer to the time read from the real time clock. Accordingly, when the computer system runs continuously for long time (several months), time difference yields between the value indicated by the real time clock and the value counted by the software timer, and therefore, in the conventional structure, it is difficult to recognize correct time in the above case.

Even though the computer system runs for long time or even though power of the computer system is on/off switched, a clock for identifying the software program can work correctly. An identical crystal oscillator is used for generating standard clock for the software timer and also for generating the real time clock, so that error between the software timer and the real time clock is not accumulated.

Means for generating interruption signal to the software timer is used to reduce the above time error, which is constituted by a first counting means and a second counting means. The first counting means exerts interruption upon the software timer a fixed times (the first set value), and then, the second counting means exerts interruption upon the software timer a fixed times (the second set value). The first and second counting means are switched alternately to eliminate the above error.

Fig. 8 shows one example of interruption signal generating means to the software timer. Assuming that interruption to the software timer is carried out every 10ms. Standard clock generating means 1211 outputs 32.768 kHz clock as real time clock. Divider 1212 frequency-divides the above clock of 32.768 kHz into 4, and generates 8.192 kHz clock. The first counter 1213, the second counter 1214, the third counter 1215 and the fourth counter 1216 are 4 bit type up-counters. Flip-flop circuit 1217 is provided to switch operation mode and gives instruction to respective counters to change initial count values.

Power supply monitoring means 1218 monitors on/off state of the power supply, power failure or restoration of the power supply, and gives loading signal $\overline{LD}$ for the count set value to respective counters in accordance with signal $\overline{DCFAIL}$ generated when electricity is turned on.

Function as to divided clock CK 8.192 kHz and interruption 10ms to the software timer will be explained in the following.

The period of divided clock CK(8.192kHz) is approximately 0.112 ms. Even though this value is made integer times, resultant value never equals to 10ms. That is, it takes 9.887ms for counting 81 divided clocks, and on the other hand, it takes 10.009ms for counting 82 divided clocks. Interruption is carried out when 81 divided clocks are counted or when 82 divided clocks are counted. As the result, it is possible to keep permissible error less than 1%. Further, if operation, which counts 82 divided clocks CK, is repeated 23 times, and then, if operation, which counts 81 divided clocks CK, is repeated 2 times, the total number of the divided clocks is as follows:

82*23 + 81*2 = 2048

If 2048 divided clocks were converted to time, it is equivalent to 250ms, and if interruption were carried out every 250ms (2048 clocks), the cycle of the interruption is equivalent to the integer times (25 times) of 10ms. In this case, such an error less than 1% as described in the above can not be accumulated.

Fig. 9 is a time chart showing initial state of the device. When electricity is applied, signal $\overline{\text{DCFAIL}}$ turns to H, and the device generates load signal $\overline{\text{LD}}$(L). As the result, E(hexadecimal) is set to the first counter 1213, A(hexadecimal) is set to the second counter 1214, 9(hexadecimal) is set to the third counter 1215 and E(hexadecimal) is set to the fourth counter 1216. The first counter 1213 and the second counter 1214 compose 82 number counter, and the third counter 1215 and the fourth counter 1216 compose 23 number counter.

Fig. 10 is a time chart showing function of the calendar clock in the invention.

Mode 1 shows the reset state of flip-flop circuit 1217. At the beginning of time t1, E(hexadecimal) is set to the first counter 1213 and A(hexadecimal) is set to the second counter 1214, and further, 9-(hexadecimal) is set to the third counter 1215 and E(hexadecimal) is set to the fourth counter 1216.

From this state, the calendar clock in the invention starts to count divided clock CK. The first counter 1213 generates carry output CA(H) when the first counter 1213 counts clock CK up to F. The second counter 1214 counts carry output CA(H) from the first counter 1213. The first counter 1213 and the second counter 1214 count 82 clocks of divided clock CK in time duration t1, and after 10.009ms from the beginning, transmit 10ms interruption signal (H).

The third counter 1215 and the fourth counter 1216 compose 23 number counter, which counts AND (logical multiplication) of carry output CA from the first counter 1213 and carry output CA from the second counter 1214. That is, the 23 number counter generates an output after the operation for counting 82 clocks of divided clock CK is repeated 23 times (the first set value).

On the basis of the carry outputs from the third counter 1215 and the fourth counter 1216, flip-flop circuit 1217 is inverted from reset state to set state, and the state of the device is changed to mode 2.

In this mode, F(hexadecimal) is set to the first counter 1213, A(hexadecimal) is set to the second counter 1214. These counters compose a 81 number counter. Further, E(hexadecimal) is set to the third counter 1215, and F(hexadecimal) is set to the fourth counter 1216. These counters compose a binary counter.

In mode 2, the third counter 1215 and the fourth counter 1216 count 81 clocks of divided clocks CK, and after 9.8871ms, transmits 10ms interruption signal to the software timer. The third counter 1215 and the fourth counter 1216 generate carry outputs CA after operation for counting 81 clocks of divided clock CK is repeated 2 times (the second set value).

On the basis of the carry outputs, flip-flop 1217 is inverted from set state to reset state, and the state of the device is change to mode 1.

In short, the calendar clock in the invention functions as follows:

In the first mode, operation of counting 82 clocks of divided clock CK is carried out 23 times, an interruption signal of 10.009ms being generated in each operation. After that, the device is changed to the second mode. In this mode, operation of counting 81 clocks of divided clock CK is carried out 2 times, an interruption signal of 9.887ms being generated in each operation.

Based upon the above operation, the calendar clock of the invention can generate an interruption signal having no time error to the software timer.

Moreover, the calendar clock of the invention can set the device to initial state in accordance with signal $\overline{\text{DCFAIL}}$ applied from power supply monitor 1218 and can restart operation for generating interruption signal, even though the power supply is shut down in operation.

As described in the above, the calendar clock of the invention used to run the software program can advance correctly and does not generate error, even though the computer system is operated continuously for a long time or the power supply is shut down in operation.

Returning to Fig. 7, 16 bit bus B4 includes 128kB ROM 114 and communication interface 115 connected to other line computers or other line controllers so as to conduct data exchange. Further, 16 bit bus B4 includes graphic controller 116 which takes part in graphic displaying and CRT displaying controller 117 provided with display memory 118. Graphic controller 116 writes graphic data in a frame buffer area in display memory 118. This display memory 118 also has an area for storing character display data, whereby CRT controller 117 conducts CRT display control in mixture both the graphic data and the character data. In this invention, the above object can be attained by such a simply structured line computer using small number of chips or gates.

Namely, the memory areas of a single memory element is divided into multiple areas to store character codes, attribute data, and font pattern in each area.

When display operation starts, the character control apparatus conducts time sharing operation in 1 display cycle, so that read operation of the code area, read operation of the attribute area, read/write access to the CPU, and read operation of the font area are carried out in time sharing manner in one display cycle, or so that simultaneous read operation of the code area and the attribute area, read/write access to the CPU, and read operation of the font area are carried out in time sharing manner in one display cycle.

Fig. 11 is a block diagram showing structure of a character displaying apparatus. Structural feature of this embodiment is that a single RAM 201 is divide into 3 memory areas, that is, code area 201a, attribute area 201b, and font area 201c to store previously character code, attribute data and font pattern in respective data.

When display of character is instructed from main processor 102, CRT controller 202 generates display address signal used for scanning. In accordance with the display address, the font pattern is applied to shift resister 203. Attribute controller 204 executes CRT displaying by making reference to these font pattern and attribute information.

Detailed explanation as to structure and function of this apparatus is done in the following.

Display address n generated from CRT controller 202 is applied to terminal S0 of selector S and to attribute address converter 205. This attribute address converter 205 receives display address n from CRT controller 202, and makes scan address in attribute area 201b so as to read out the attribute data which corresponds directly to the character code stored in code area 201a. Then, attribute address converter 205 sends a converted address to terminal S1 of selector S.

Display address n from terminal S0 of selector S is applied to code area 201a in RAM 1041, so as to read out corresponding character code. The read out character code is latched by code latch CL, and then is sent to font address converter 206.

Font address code converter 206 converts the applied character code to font address code so as to read out the corresponding font pattern from font area 201c in RAM 201, and sends this font address to terminal S3 of selector S.

Attribute data and font pattern read out from RAM 201 are latched by attribute latch AL and font latch FL respectively.

On the other hand, address bus AB which is connected to CPU is connected to terminal S2 of selector S, and data bus DB is connected to bus driver BD.

Timing controller 207 is a block to control respective timing of selector S, attribute latch AL and font latch FL.

In accordance with a time chart in Fig. 12, function of the apparatus will be explained.

Display cycle T starts when display address n is applied from CRT controller 202. By the timing output from timing controller 207, terminal S0 of selector S is selected, and then character code CDn is read out from code area 201a in RAM 201 according to display address n, and the read out data is latched to code latch CL (period t1).

Then, terminal S1 of selector S is selected, output (address n for attribute address area + offset) of attribute controller 204 is applied to attribute area 201b in RAM 201. In accordance with this attribute address, attribute data ATn is latched with attribute latch AL (period t2). In this case, attribute data ATn is delayed for a time necessary for qualifying serial display pattern data later.

Then, terminal S2 of selector S is selected, and in period t3, main processor 1 executes random access to RAM 201, in accordance with address transmitted from main processor 1. Further, terminal S3 is selected, and access to font area 201c in RAM is executed in accordance with the font address applied from font address converter 206. The read out font pattern np is latched with font latch FL (period t4).

In next display cycle T1 of which display address is n+1, display data stored in RAM 201 is read out in the same manner as in the above. On the other hand, font pattern np (np0, np1, np2...) of font latch FL is loaded shift resister 203. Font pattern np is sent to attribute controller 204 together with attribute data ATn from attribute latch AL. Thus, display is executed with CRT.

As described in the above, RAM 201 is divided into multiple areas and different data are stored in these areas separately. And in 1 display cycle, RAM access is carried out by time-sharing processing. If the width of the data is sufficiently large, both character code CDn and attribute data ATn can be accessed at the same time.

In the character display controller, memory area is divided into multiple areas, and in the respective parts, code data, attribute data and font data are stored. And when these data are displayed, the data are read out by a time-sharing manner from the above respective areas. Therefore, the numbers of memory elements can be reduced.

Further, in Fig. 11, if CRT controller 202, shift resister 203, attribute controller 204, attribute address converter 205, font address code converter 206, timing controller 207, selector S, code latch CL, font latch FL, attribute latch AL, and bus BD could be configured with gate array, the number of pins can be made minimum, and the number of total elements can be reduced remarkably.

Returning now to Fig. 7, explanation for the periphery of VME-bus controller 105 connected to 32 bit bus B1 is conducted in the following. VME-bus controller 105 is a control block to control, through VME-bus B2, I/O boards C1, C2, ... which are board type, optional equipments for processing communication.

In detail, these I/O boards includes, for example:

(1) an I/O board having interface function to connect with other line computers;
(2) an I/O board having interface function with lower-level controllers which conduct, between field instruments, signal transmission and signal reception for such signals as contact signals, analog signals or digital signals;
(3) an I/O board having interface with such an auxiliary memory as a cartridge tape device, or a floppy disk device;
(4) an I/O board having communication facility with GP-IB instruments;
(5) an I/O board having interface function which satisfies such standards as RS232C, RS422, or RS485 etc.;
(6) an I/O board between semiconductor manufacturing apparatus and computers, structured in accordance with such communication procedure as SECS (SEMI Equipment Communications Standard, SEMI:Semiconductor Equipment and Materials Institute );
(7) an I/O board which supports BSC(Binary Synchronous Communication) communication;
(8) an I/O board which supports Ethernet communication; or
(9) an I/O board which supports MAP-(Manufacturing Automation Protocol ) communication.

In the conventional apparatus, a board driver provided in each I/O board monitors, by use of a timer, response from the I/O board where the main processor 102 makes access, and detects failure of the I/O board from the time when time is up. However, in the conventional apparatus, when the I/O board fell into inoperative state due to hardware trouble or software trouble, the main processor side could not notice the trouble of the I/O board until the time was up in the timer.

Therefore, the conventional apparatus has such disadvantage that the effect of failure might spread to the entire system, the total system might be downed, or some kinds of troubles might be invited.

In this invention, abnormality of each I/O board is promptly notified to a main processor, so that the effect of the failure may be made minimum. Namely, in this invention, the I/O board outputs a fail signal when the I/O board detects by itself abnormality. The board driver which receives the fail signal from the main processor, gives self diagnosis instruction to a corresponding I/O board to the board driver.

If the result of the self-diagnosis were abnormal, said I/O board is cut off, and further, said board driver is assumed as an error driver.

Fig. 13 is a schematic diagram which shows system concept for abnormality detection in this invention, in which main processor 102, VME-bus controller 105, and plural I/O boards C1, C2 ... Cn are included. In this figure, CPU board 100 is connected, through VME-bus controller 105, to plural I/O boards C1, C2 ... Cn. Board control circuit CC which functions to output fail signal FAIL to CPU board 100, is provided in each I/O board.

In CPU board 100, means 1081 for detecting abnormality of board is provided, which functions to generate diagnosis request signal when fail signal FAIL is applied from board control circuit CC, and further, board driver 1082 is provided in each I/O board C1, C2 ... Cn.

This board driver 1082 is software executed by main processor 102, main memory MM and VME-bus controller 105 shown in Fig. 7. This board driver 1082 includes following functions:

(1) normal function to control regular operation of the I/O board;
(2) self-diagnosis function 1082a to conduct diagnosis in accordance with the self-diagnosis request RQ and to receive the result ST of the self-diagnosis; and
(3) function 1082b to separate, in accordance with the result ST of the self-diagnosis, the troubled I/O board from CPU board 100, and to change the concerned board driver 1082 to error state so as to stop the operation of the board driver.

Fig. 14 is a schematic diagram which shows conceptional structure of the hardware. By this structure, VME-bus controller 105 is constituted by gate array, and further in each I/O board, gate array BG is arranged. When the installed I/O board becomes abnormal (or normal), gate array BG on the I/O board side generates (or terminates) fail signal FAIL, and transmits the normal(or abnormal) status of the I/O board through an internal register.

Further, fail signal line is provided in VME-bus B2, thereby to inform fail signal FAIL generated on the I/O board side. VME-bus controller 105 functions to send fail signal FAIL, as an interrupt signal IR, to main processor 102.

Fig. 15 is a schematic diagram which shows conceptional structure of the software in this invention. This software concept includes the following items:

(1) fail signal detecting driver S1 which accepts fail signal FAIL as interrupt signal IR;

(2) board abnormal acknowledge task S2 started by this fail signal detecting driver S1;

(3) board driver 1082 where self-diagnosis operation is requested by board abnormal acknowledge task S2; and

(4) user program S5 to operate board driver 1082.

Still, farmware and register S4 is a software block on the I/O board side, thereby to execute self-diagnosis operation by board driver 1082.

Function of the above structure is explained in the following.

For example, when such abnormality occurs on the I/O board side, that a watch dog timer informs abnormally, gate array BG on the I/O board side transmits fail signal FAIL on bus B2. VME-bus controller 105 detects this fail signal FAIL on bus B2, and sends interrupt signal IR to main processor 102.

When main processor 102 receives interrupt signal IR, the software shown in Fig. 15 is executed. Namely, fail signal detecting driver S1 detects interrupt signal IR, and notifies this abnormality to board abnormal acknowledge task S2. When board abnormal acknowledge task S2 detects the abnormality of the I/O board, this state is informed to board driver 1082, and this board driver requests a corresponding I/O board to conduct self-diagnosis. The self-diagnosis is executed by board driver 1082.

Board driver 1082 reads an internal register of gate array BG on the I/O board side, and confirms whether or not the I/O board would be abnormal state.

When board driver 1082 acknowledges the abnormal state, this board driver 1082 works upon gate array BG so as to prohibit signal transmission of fail signal FAIL therefrom. Simultaneously, board driver 1082 is changed by itself into error state, so that it can not access to the failured I/O board. Namely, this can be assumed, in a hardware sense, that board driver 1082 functions to separate said I/O board from CPU board 100. As the result, even if user program S5 accesses to board driver 1082 which became to error state, this board driver 1082 replies error signal. That is, this can be assumed, in a software sense, that board driver 1082 functions to separate said I/O board from CPU board 100.

As stated in the above, in this invention, the failured I/O board can be separated promptly from CPU board 100 in both hardware viewpoint and software viewpoint. Thus, by this invention, abnormality of each I/O board is promptly notified to a main processor 102, so that the effect of the failure, such as system shutdown or hang-up, may be made minimum.

Returning to Fig. 7, explanation concerning floppy disk drive controller 108 is done in the following. For example, 3.5 inch floppy disk drive FD1 is connected to floppy disk drive controller 108. In addition, such demand often occurs, that 5 inch floppy disk drive, or 8 inch floppy disk drive must be connected as the system expands. Generally, the 5 inch floppy disk drive and the 8 inch floppy disk drive are connected to 3.5 inch floppy drive FD1 using daisy chain connection method.

However, in the conventional daisy chain system, when the tail drive having a terminal resistor is detached, the daisy chain becomes open, and thus, it is necessary to install newly a terminal resistor in the new tail disk drive. Further, when all floppy disk drives are detached from the daisy chain, a terminal resistor must be installed in main body unit 10 side.

Furthermore, when the power supply of the tail floppy disk drive is turned off, the signal at the terminal resistor turns from pull-up state to pull-down state.

In the above case, it is impossible to execute read/write access to 3.5 inch floppy disk drive FD1.

To overcome the above drawbacks, in the daisy chain system of this invention, terminal resistors are installed in all floppy disk drives connected to the daisy chain. As the result of this, any floppy disk drive may be detachable freely. Further, in each floppy disk drive, buffers are provided in parallel with an internal receiver. Thus, even when any of these floppy disk drives is turned off, there occurs no adverse effects.

Fig. 16 is a schematic diagram which shows connection of the floppy disk drive system in this invention.

In this example, 5 inch floppy disk drive FD2 and 8 inch floppy disk drive FD3 are connected, by daisy chain structure, to transmission/reception portion FD10 for 3.5 inch floppy disk drive arranged in main body 10, through lines L1 and L2.

The feature of this system is in that terminal resistors FD1Z, FD2Z, and FD3Z are connected to daisy chain receivers FD1R, FD2R and FD3R of transmission/reception portions FD10, FD20 and FD30 in each floppy disk drive.

Further, the another feature of this system is in that buffer (receiver FD1I and driver FD1A) is connected in parallel with daisy chain receiver FD1R in main body unit 10.

In the same manner, in 5 inch floppy disk drive FD2, buffer (receiver FD2I and driver FD2A) is connected in parallel with daisy chain receiver FD2R.

Namely, in this system, terminal resistors are installed in all floppy disk drives to be connected to the daisy chain, and each floppy disk drive is connected, through the buffer (the receiver and the driver), to the next floppy disk drive.

Assuming that 5 inch floppy disk drive FD2 or 8 inch floppy disk drive FD3 becomes needless in operation, when one of these floppy disk drives is detached from the system, the floppy disk drive previous to the detached floppy disk drive becomes a new tail drive. In this case, since all floppy disk drives have the terminal resistors, it is unnecessary to install the terminal resistor in the new tail drive.

Assuming that a new floppy disk drive is connected to the daisy chain, since in this floppy disk drive, a terminal resistor is also installed, there occurs no adverse effect.

Next, assuming that the power supply of 5 inch floppy disk drive FD2 or 8 inch floppy disk drive FD3 is turned off in operation, an output signal from driver 108D of floppy disk controller 108 in main body unit 10 is isolated with receiver FD1I and driver FD1A from the external floppy disk drives, and thus, floppy disk controller 108 does not receive any adverse effect resulting from the cut off of power supply in the external floppy disk drives.

For example, open-collector type is employed for the signal output of the external floppy disk drive, and thus, main body 10 and respective floppy disk drives does not receive any adverse effect resulting from the cut off of power supply in other floppy disk drives.

In accordance with these floppy disk drive connection system, following advantages can be obtained.

(1) It is unnecessary to install a terminal resistor in the drive previous to the tail drive, when the tail drive is detached from the daisy chain.

(2) Moreover, the system of this invention does not receive any adverse effect even when the power supply of the external floppy disk drive is on-off switched.

(3) Floppy disk drives may be connected to or detached from the main body unit freely.

(4) Changing of the system configuration becomes easy because on-off switching can be done arbitrarily.

Explanation as to software program to be loaded in the above hardware structure is done in the following.

In a factory automation, the line computer controls various kinds of equipments installed to a manufacturing line site. In the line computer, interpreter type language is loaded in order to execute real time processing. In general, these control program is made by use of BASIC interpreter type language. When the control program is inputted, the BASIC interpreter installed in the line computer generates middle codes, and then the control program is executed by interpreting the above middle codes.

By the way, the program language includes such compiler type language as C language, other than the above interpreter type language. In case of the program made by the compiler type language, the program can be executed in high speed since the program is once converted into execution form program by the compiler.

In the factory automation field, there occurs such demand that the compiler type language has to be used in a place where high-speed processing is necessary. Actually, control programs described by the compiler language increase day by day.

However, in the conventional apparatus, it is difficult to make the program in execution form made by the compiler type language exist together in the middle word area of the interpreter type language in the user area of the memory, by the following reasons.

(1) The interpreter of the system is not provided with function to load such execution type program.

(2) Since method for delivering arguments from the interpreter type program to the execution type program depends upon language type, the interface therebetween can not be determined uniquely.

(3) Address value corresponding to the position dependence type code in the execution form program is influenced by amendment of the interpreter type language program.

In this invention, the execution form program made by the compiler type language can be included in the interpreter type language program. The method to make the execution form program made by the compiler type language contain in the interpreter type language program, is as follows.

(1) In accordance with adapter procedure, the arguments in the interpreter type language program are taken into the execution type program side, and main function is set for it.

(2) The static variables in the execution form program are copied from data area to a first static area, every time when the interpreter type language program is executed.

(3) When the interpreter type program involves places to be amended, by pre-run processing, all the contents of the branching destination addresses specified by all position dependence codes in the execution form program, are rewritten.

By the above procedures, the system allows coexistence of the programs.

Fig. 17 shows the allocation of software programs in user memory area A, in which the execution type program made by the compiler type language is loaded in the middle word area A1 of the inter preter type program. In this example, BASIC language is used for the interpreter type language, and C language is used for the compiler type language.

Namely, the user area A of the memory is constituted by BASIC middle word area A1 where BASIC middle word is set, C library area A2 where C language library is set, and machine word library area A3 where machine language library is set.

In usual operation, BASIC interpreter BSI reads BASIC middle word area A1, and executes this.

In addition, in C library area A2, adapter area A21, code area A22 for storing the code actually used by the user, first static variable area A23 for storing the static variable of which initial value is set, second static variable area A24 of which initial value is not set, data area A25 for storing the initial value of the static variable, and address converting table A26 for rewriting address values of the position dependent code in code area A22 are set.

In the conventional apparatus, C library of the execution form, described in the user area, is configured from code area A22, first static variable area A23, and second static variable area A24. However, in this invention, adapter area A21, data area A25 and address converting table A26 are additionally provided in this area.

Detail functions of these area A21, A25 and A26 are as follows:

BASIC interpreter BSI calls adapter area A21 through a common interface which functions to call the compiled execution program as a subroutine.

Programs in adapter area A21 functions to pile various arguments in BASIC middle word in a stack, and call the main function in C library.

Initial value data to be set in first static variable area A23, is stored in data area A25, and is copied to first static variable area A23 when pre-run of BASIC interpreter BSI is carried out. Second static variable area A24 where static variable having no set initial value is stored, is initialized to 0 when the above pre-run is carried out.

Pre-run of BASIC interpreter BSI means such processing as one carried out prior to program-execution in order to secure data or processing table area to be used at execution period.

By the way, if a BASIC program is changed after the C language was loaded to the BASIC middle word area, the position of the C library on the user memory area A may shift since the C library includes such position dependent code as branch instruction or jump instruction.

Accordingly, if the position of the C library shifts, the branch destination address specified by the inside instruction code shifts from the address of the instruction code to be actually executed, and therefore, it is difficult to execute the C library correctly.

By pre-run processing of the BASIC program in this invention, the branch destination address in the position dependent code is converted in accordance with address converting table A26.

Namely, Fig. 18 shows the configuration of address converting table A26, in which a table T is allocated to each position dependent type code. In a table T, value X represents relative address value from top address to said position dependent code address in C library area A2, and value Y represents relative address value from the top address to the branch destination address in C library area A2.

Tables T (X, Y) are arranged in address converting table A26 in response to the number of the position dependent codes in the C library.

In Fig. 19, assume that the position dependent code locates at address B in C library area A2 of which top address is S (S: relative address between the top address of the memory area and the top address of C library area A2, B: relative address between the top address of the memory area and the location address of the code in C library area A2). The value of the branch destination address is given by S + Y in accordance with table T in Fig. 18. When the BASIC program is amended and when the top address in C library area A2 changes from S to S', the branch destination address is rewritten as S' + Y.

Thus, in this invention, the position dependent type code in the C library does not receive any adverse effects even though the original BASIC program is changed.

As aforementioned, in accordance with this invention, the execution program made by the compiler language can be loaded to the middle word area of BASIC program.

Fig. 20 is a flow chart when BASIC interpreter BSI calls C library.

When the BASIC program starts, in the C library, the initial value data in data area A25 is written into first static variable area A23, and "0" is written into second static variable area A24.

And by pre-run processing, all branch destination addresses of position dependent type codes in code area A22 are corrected in accordance with address converting table A26.

The operation stated heretofore is pre-run processing for starting the BASIC program.

When the BASIC program starts, the C library is called as a subroutine. Common interface functions to start the program in adapter area A21. And this adapter area A21 piles up arguments from the middle word area A1 of the BASIC program, and calls main functions. Then, the C library is started and the compiled C language program is executed.

As aforementioned, in this invention, the execution form program compiled by C language can be loaded in the middle word area of the BASIC program. Further, the line computer of this invention can use the compiler type language for high speed processing demand, other than the usual interpreter type language.

## Claims

1. Method of controlling a line computer for implementing a relocated compiled library program (C library) with an interpreter type language program (BASIC interpreter BSI) to control a line computer, wherein:

in a user area (A) of a main memory (MM) BASIC middle word area (A1) is set in order to store the middle word of said interpreter type language program (BASIC interpreter BSI); and

a main processor (102) executes separately, said compiled library program (C library) and said middle word of the interpreter type language program (BASIC interpreter BSI), characterized in that:

(A) in the C library area (A2) in said user area (A) said compiled library program (C library) is stored,

(a) adapting steps are set at an adapter area (A21), which is at the top of said C library area (A2), in which respective arguments in said interpreter type language (BASIC interpreter BSI) are stored, and which call main function in said compiled library program (C library),

(b) a data area (A25) is set at the rear of said C library area (A2), which stores the initial data of static variable to be used in the execution of the main function in said compiled library program (C library), and

(c) an address converting table (A26) is set at the final portion of the main function, wherein:

relative address (X) between the top address of said compiled library program (C library) and the position dependent code address, and

relative address (Y) between the top address of said compiled library address and the branch destination address indicated in said position dependent code,

are set as a pair;

(B) when said system starts and said interpreter type language program (BASIC interpreter BSI) is executed,

(a) said initial data in said data area (A25) is copied into said main function in said compiled library program (C library),

(b) said branch destination address in said main function in said compiled library program (C library) is changed, by use of said address converting table (A26), in compliance with said top address of said C library area (A2), and

(c) when said compiled library program (C library) is called as a subroutine, said adapting steps start and said main function in said compiled library program (C library) is executed after the arguments in said interpreter language type program (BASIC interpreter) being piled in a stack in said main processor (102).

Fig.1 (Prior Art)

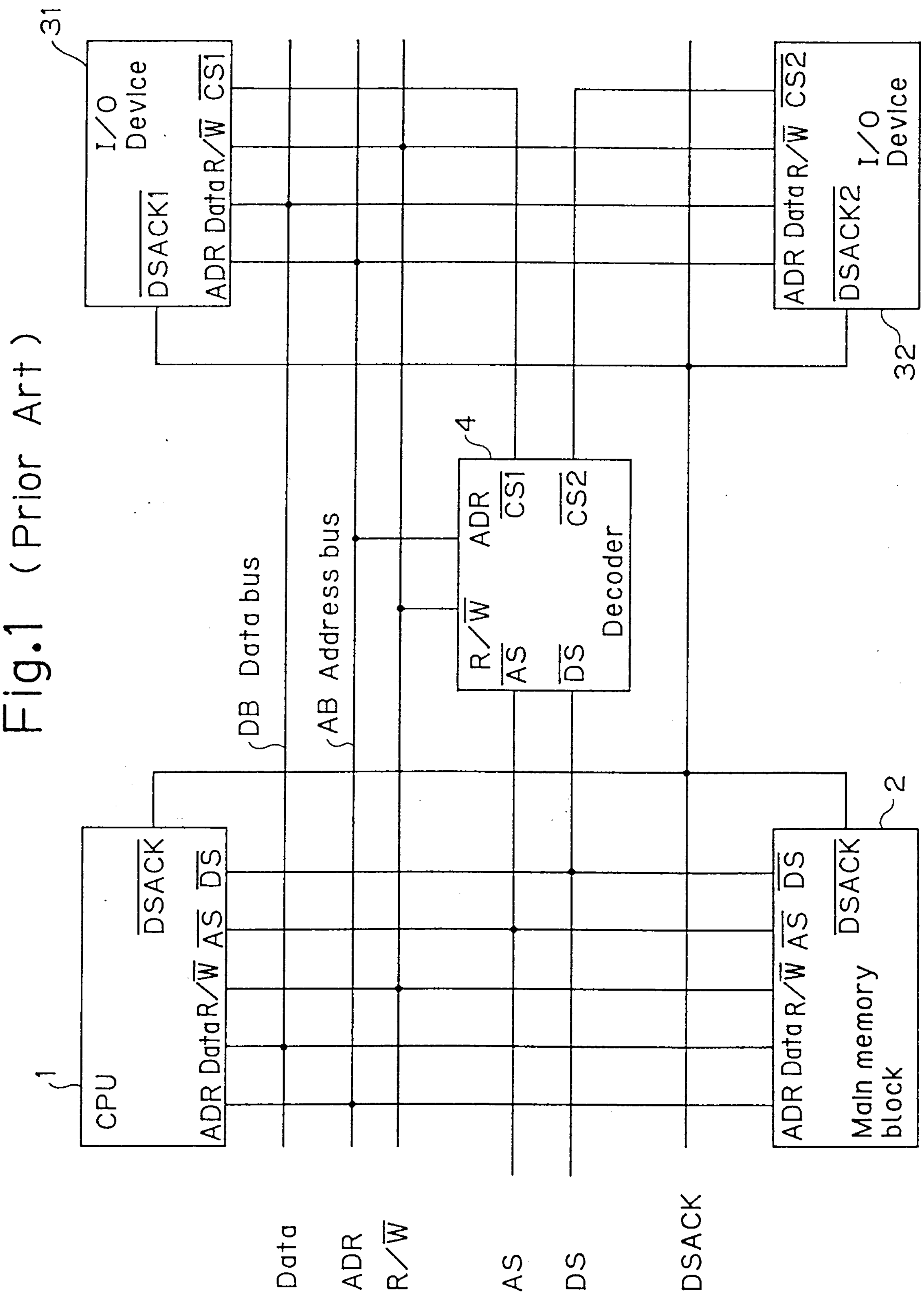

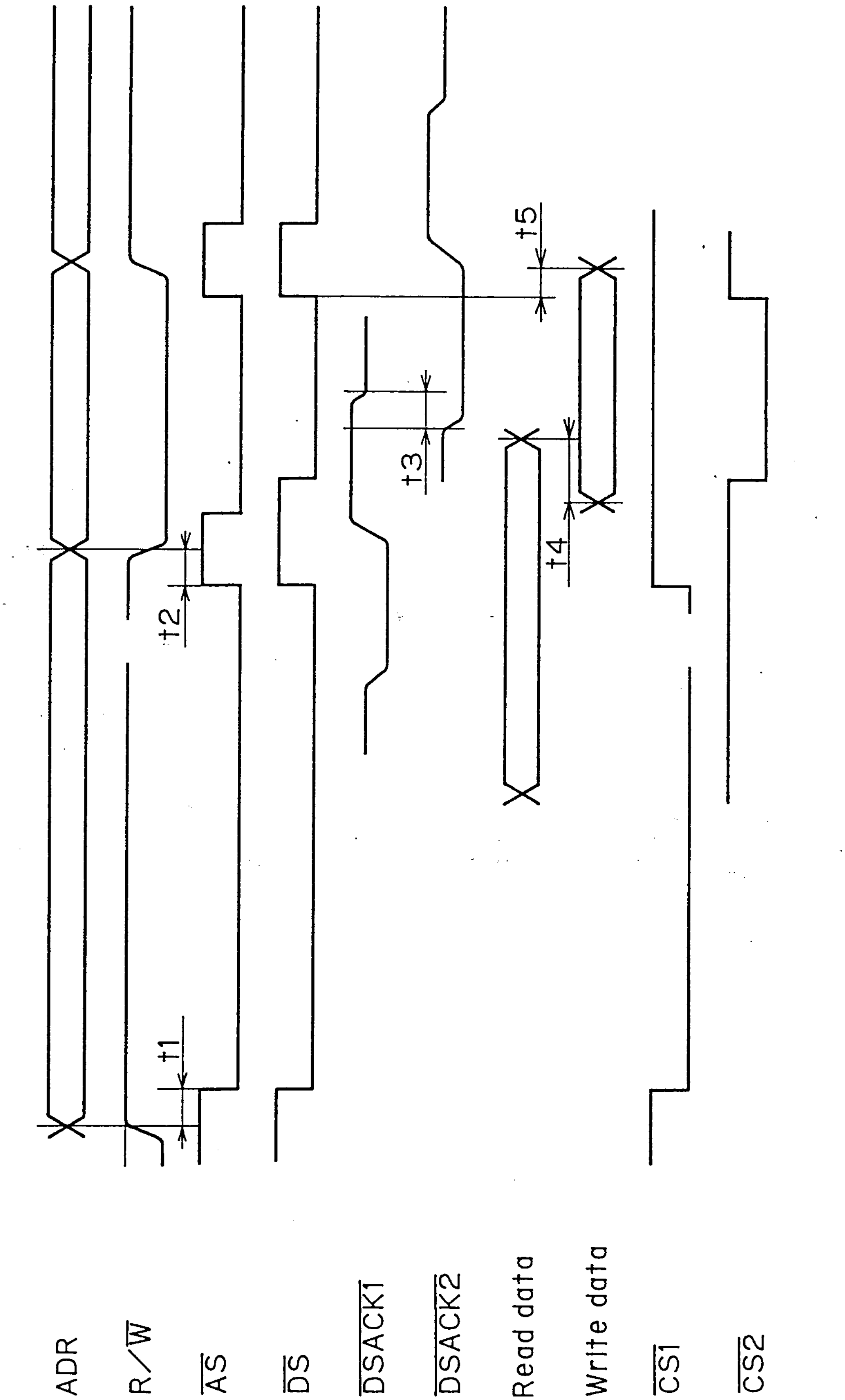
ADR
R/W
AS
DS
DSACK1
DSACK2
Read data
Write data
CS1
CS2
t1
t2
t3
t4
t5

Fig.3

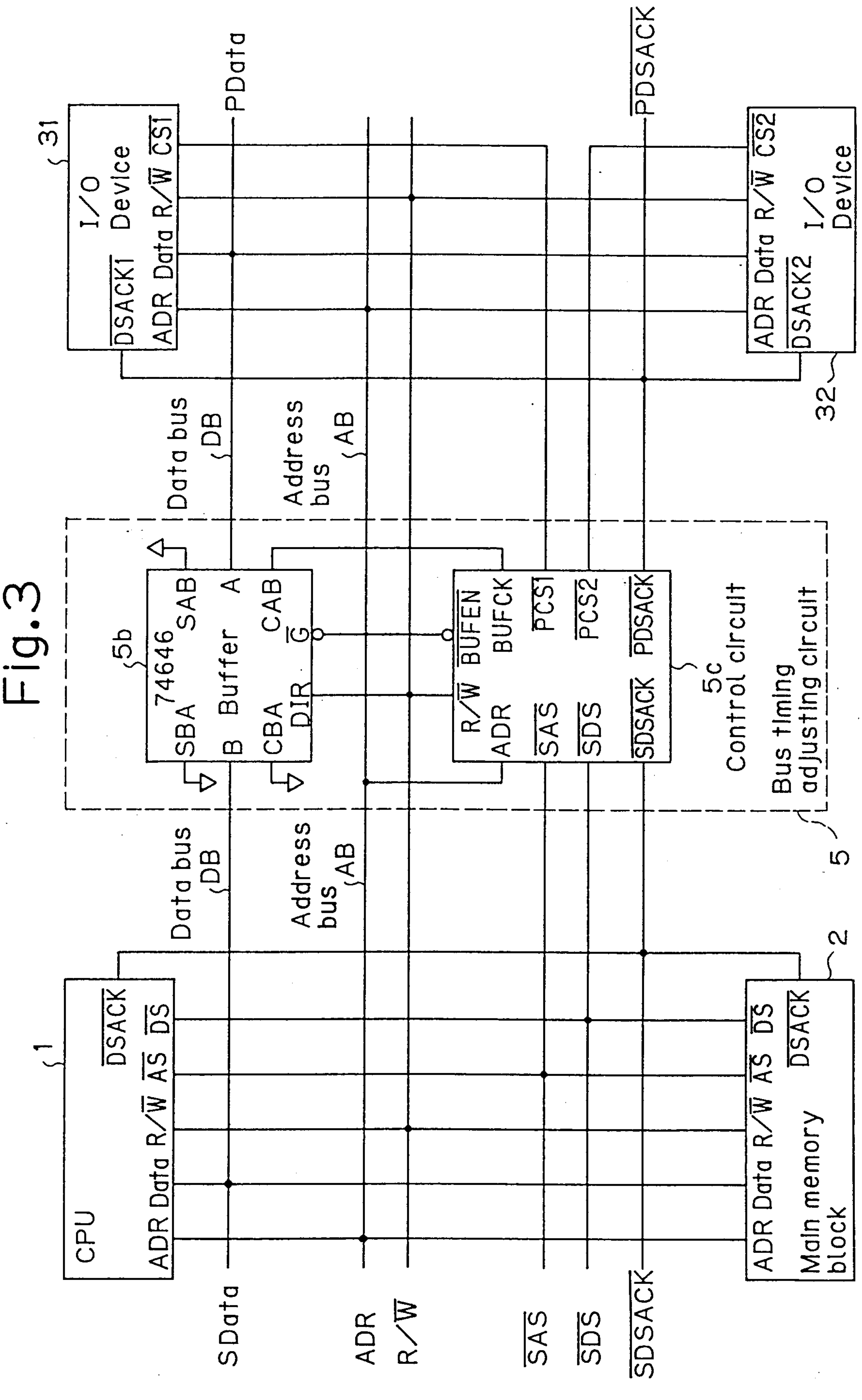
CPU
1
ADR Data R/W AS DS
DSACK
Main memory block
2
ADR Data R/W AS DS
DSACK
SData
ADR
R/W
SAS
SDS
SDSACK
Data bus DB
Address bus AB
74646 Buffer
5b
SBA SAB
B A
CBA CAB
DIR G
R/W BUFEN
ADR BUFCK
SAS PCS1
SDS PCS2
SDSACK PDSACK
5c
Control circuit
Bus timing adjusting circuit
5
I/O Device
31
DSACK1
ADR Data R/W CS1
I/O Device
32
ADR Data R/W CS2
DSACK2
PData
PDSACK

Fig.4

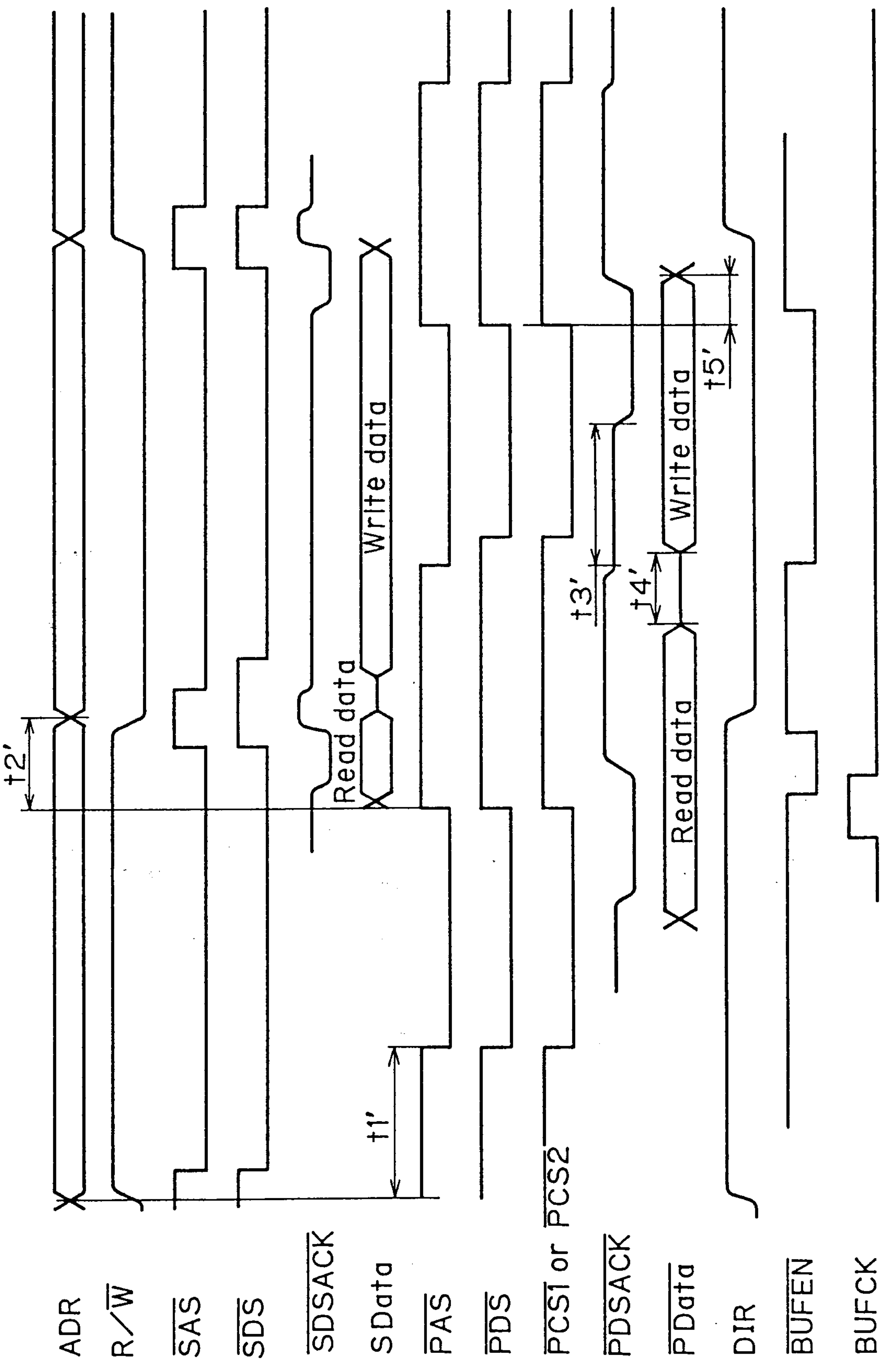
ADR
R/W
SAS
SDS
SDSACK
SData
PAS
PDS
PCS1 or PCS2
PDSACK
PData
DIR
BUFEN
BUFCK
t1'
t2'
t3'
t4'
t5'
Read data
Write data
Read data
Write data

Fig.5

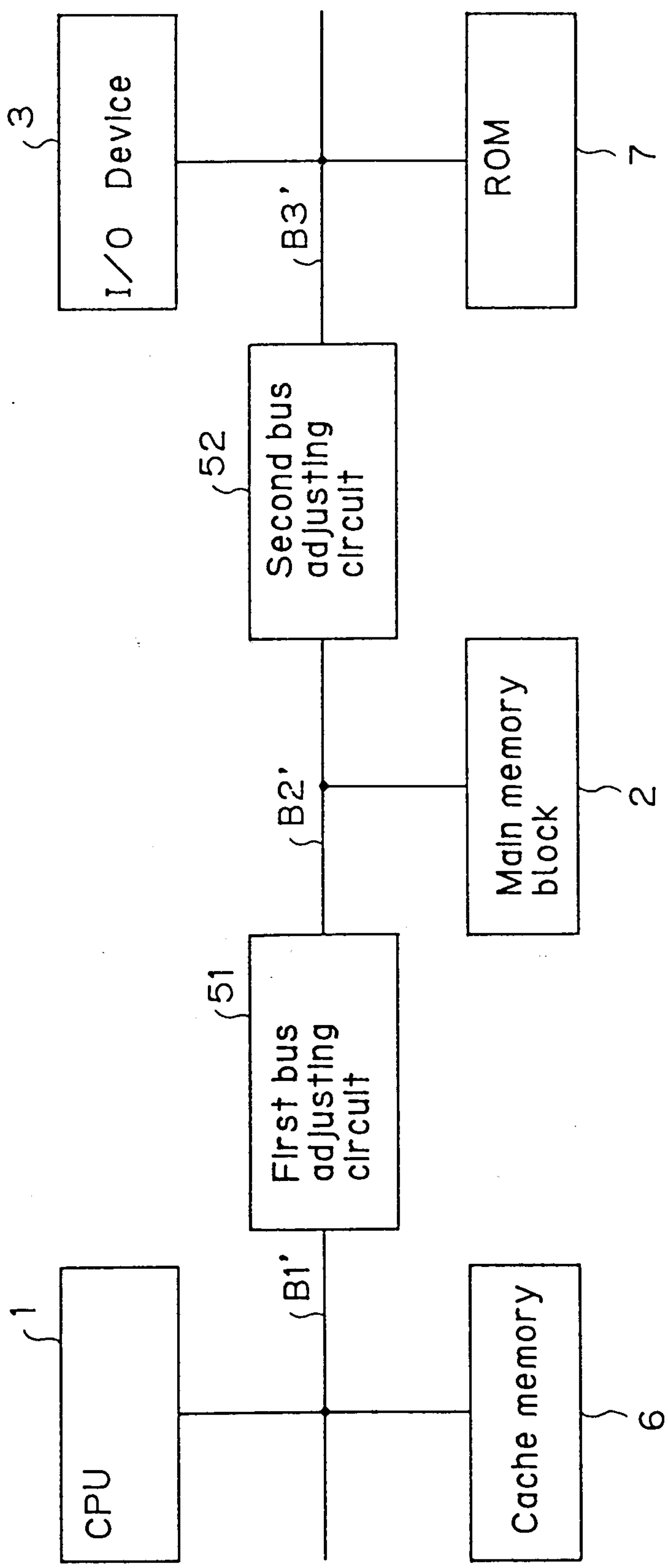
CPU
1
Cache memory
6
B1'
First bus adjusting circuit
51
B2'
Main memory block
2
Second bus adjusting circuit
52
B3'
I/O Device
3
ROM
7

Fig.6

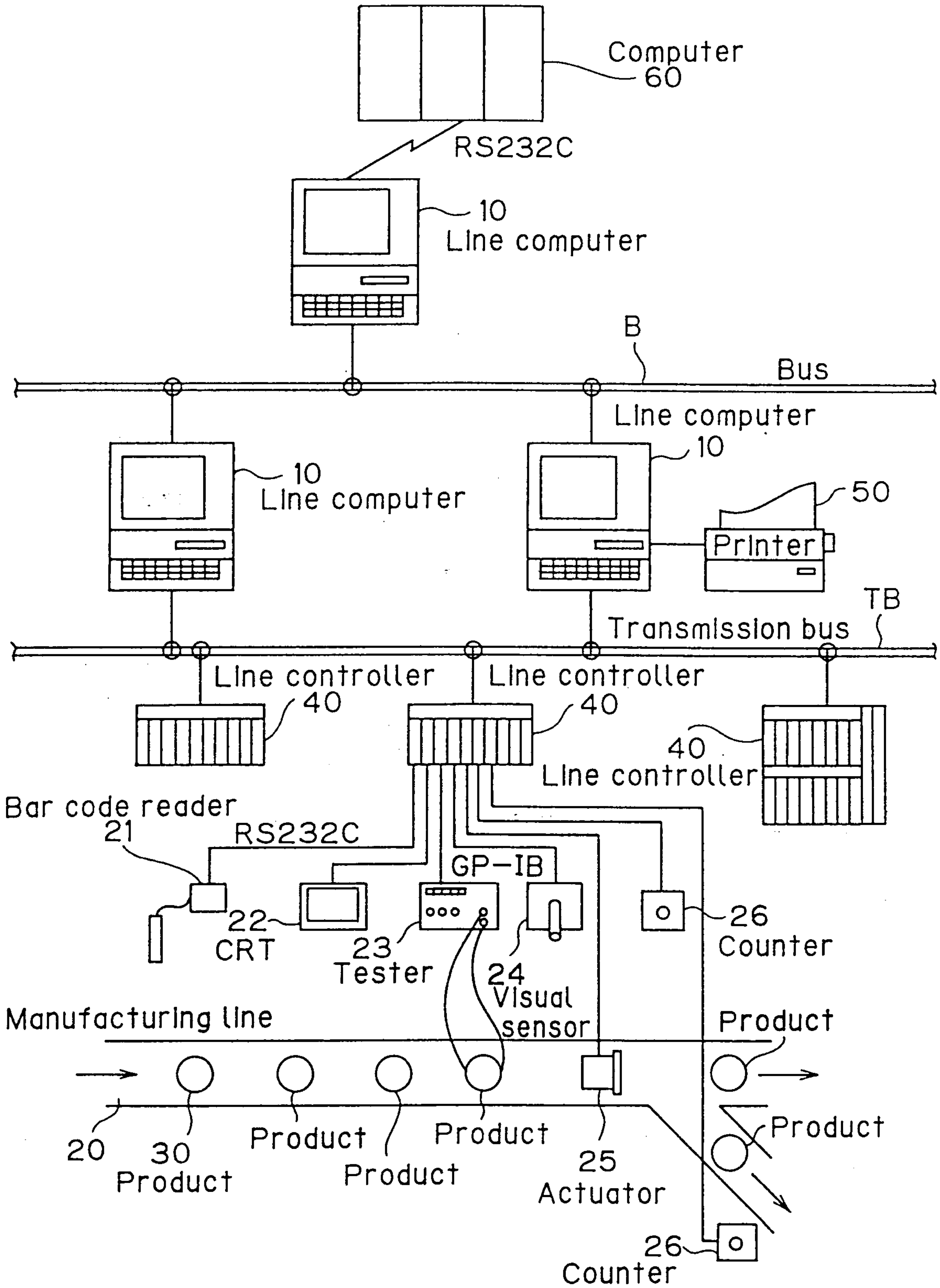
Computer
60
RS232C
10
Line computer
B
Bus
Line computer
10
10
Line computer
50
Printer
TB
Transmission bus
Line controller
40
Line controller
40
40
Line controller
Bar code reader
21
RS232C
GP-IB
22
CRT
23
Tester
24
Visual sensor
26
Counter
Manufacturing line
Product
20
30
Product
Product
Product
Product
25
Actuator
Product
26
Counter

# Fig. 7

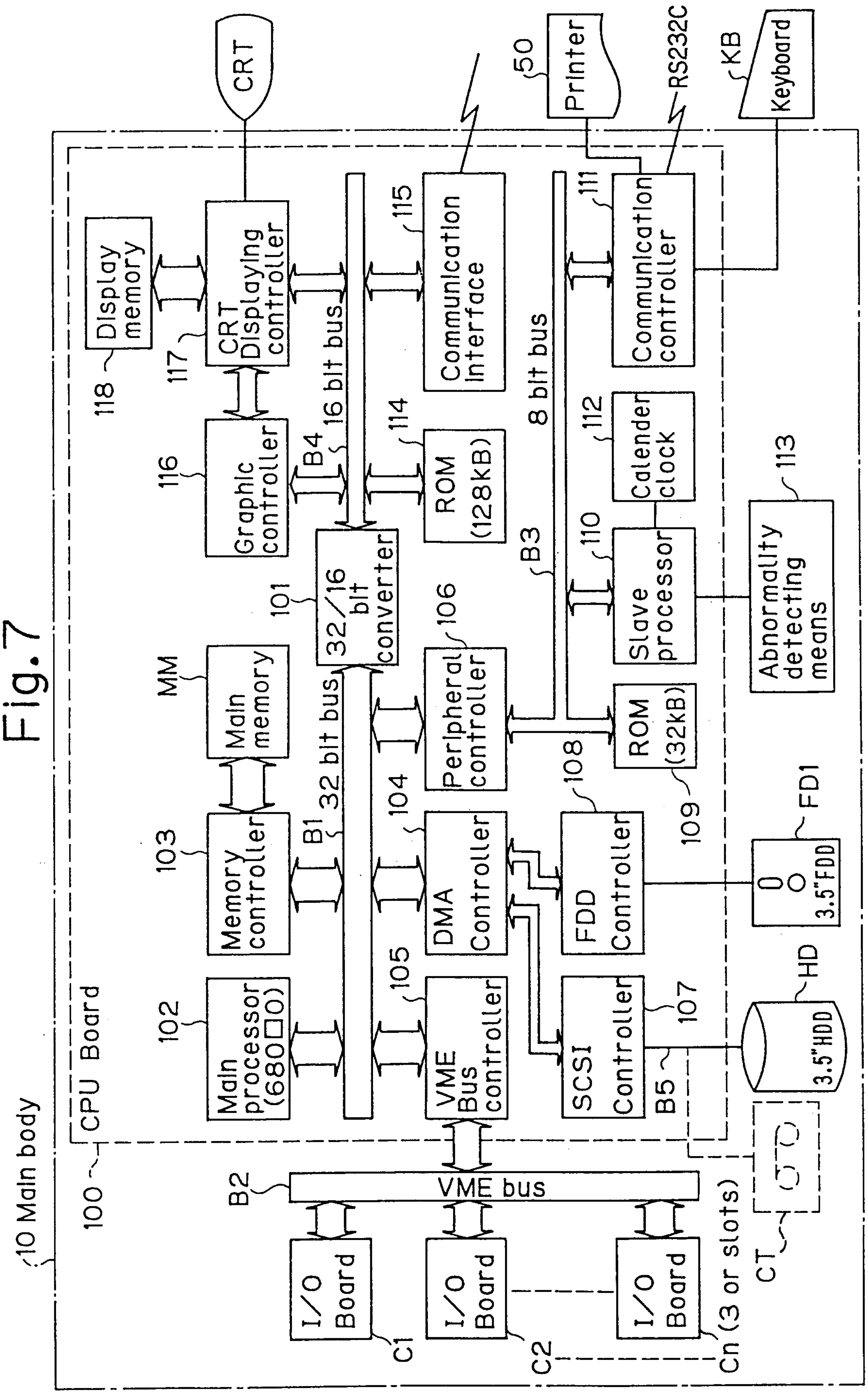
CRT
50
Printer
RS232C
KB
Keyboard
10 Main body
100
CPU Board
118
Display memory
117
CRT Displaying controller
116
Graphic controller
B4
16 bit bus
115
Communication Interface
114
ROM (128kB)
8 bit bus
111
Communication controller
112
Calender clock
113
Abnormality detecting means
MM
Main memory
101
32/16 bit converter
106
Peripheral controller
B3
110
Slave processor
109
ROM (32kB)
103
Memory controller
B1
32 bit bus
104
DMA Controller
108
FDD Controller
FD1
3.5"FDD
102
Main processor (680□0)
105
VME Bus controller
SCSI Controller
107
B5
HD
3.5"HDD
B2
VME bus
I/O Board
C1
C2
Cn (3 or slots)
CT

Fig.8

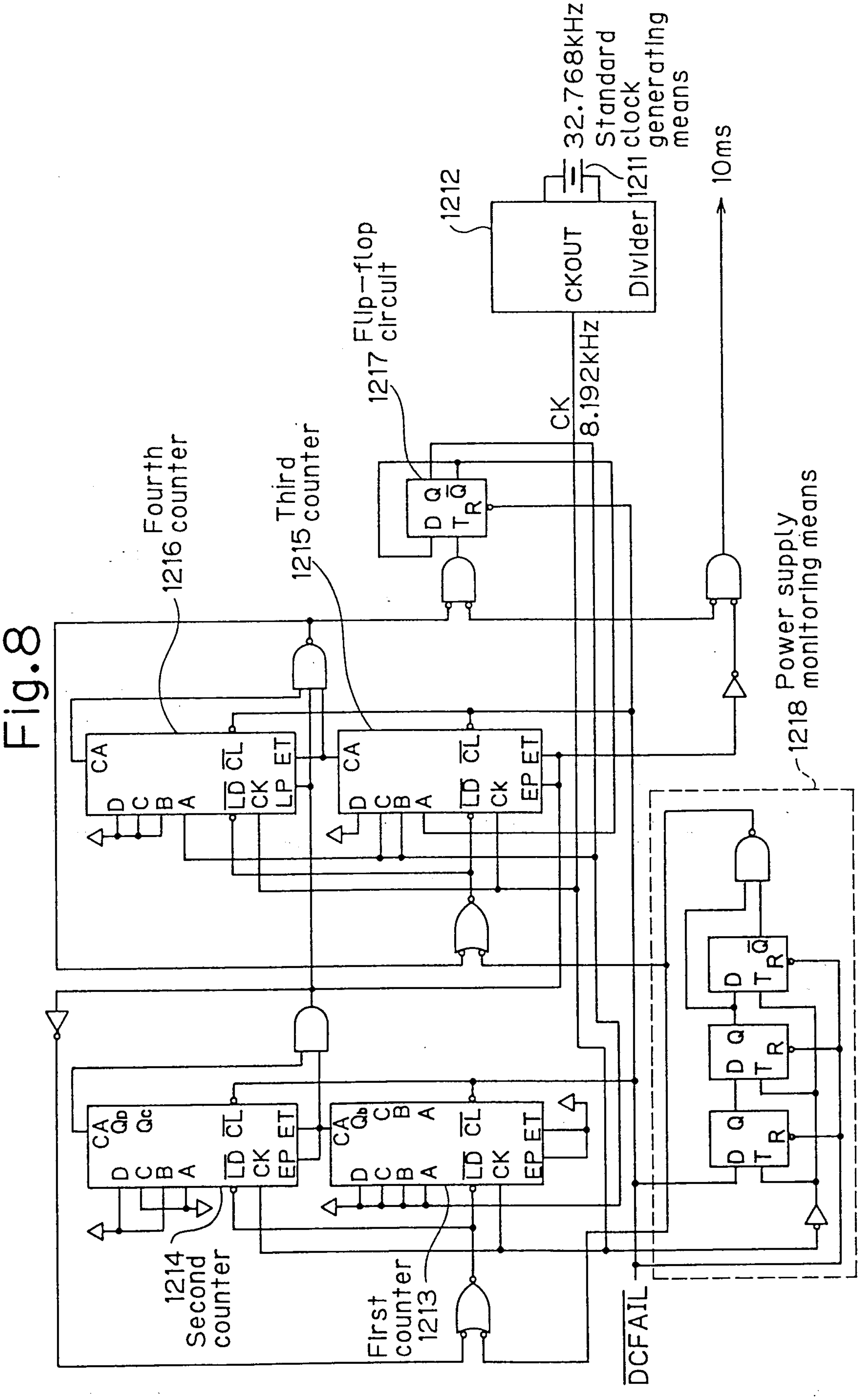
32.768kHz
Standard clock generating means
1211
1212
CKOUT
Divider
10ms
8.192kHz
CK
1217 Flip-flop circuit
D Q T R Q̄
Fourth counter
1216
Third counter
1215
Power supply monitoring means
1218
CA
D C B A
LD CL
CK
LP ET
EP ET
Qd Qc Qb
1214 Second counter
First counter 1213
DCFAIL

Fig.9

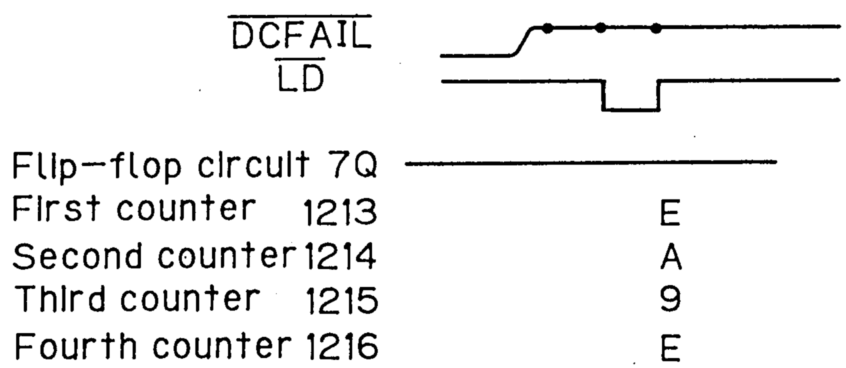
DCFAIL
LD
Flip-flop circuit 7Q
First counter 1213
Second counter 1214
Third counter 1215
Fourth counter 1216
E
A
9
E

Fig.10

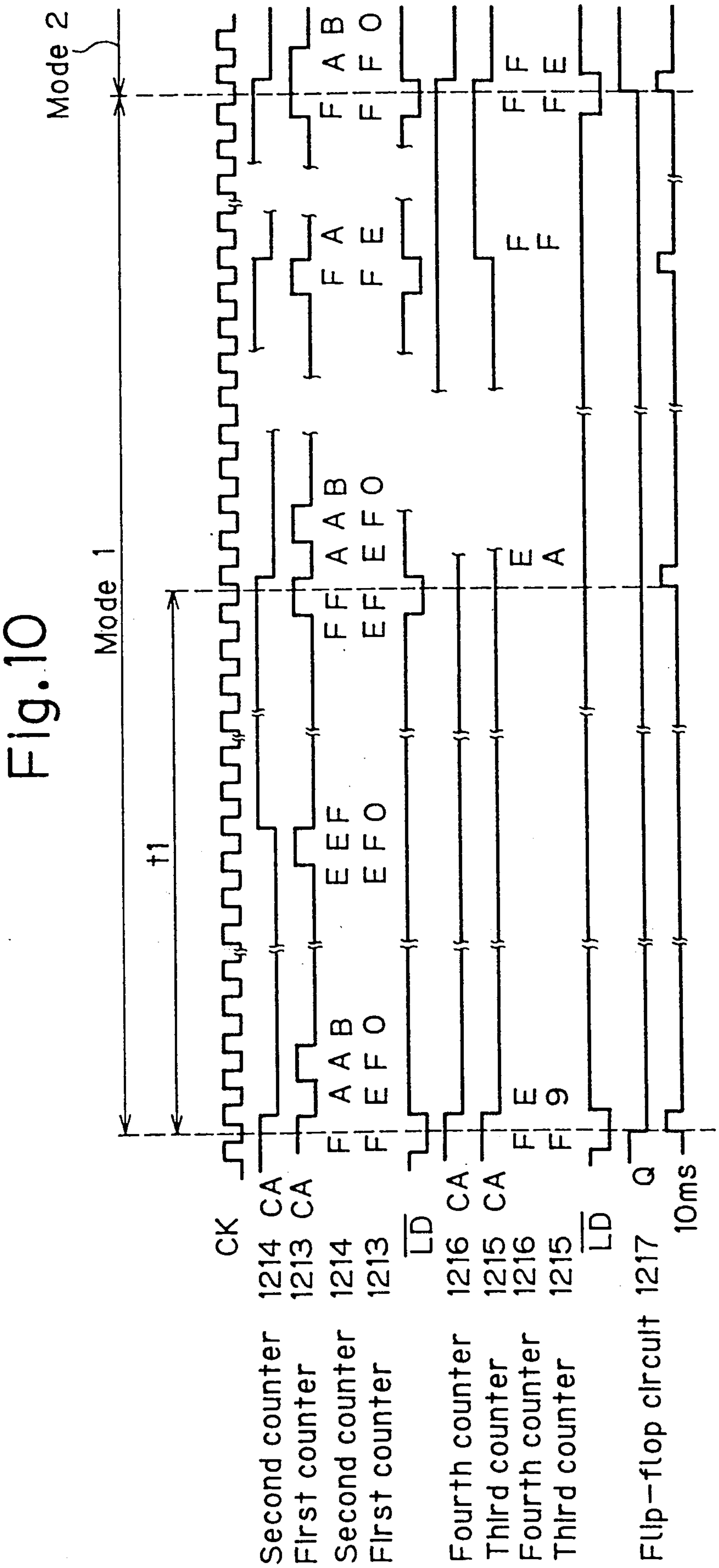
Mode 1
Mode 2
t1
CK
Second counter 1214 CA
First counter 1213 CA
Second counter 1214
First counter 1213
LD
Fourth counter 1216 CA
Third counter 1215 CA
Fourth counter 1216
Third counter 1215
LD
Flip-flop circuit 1217 Q
10ms

Fig.11

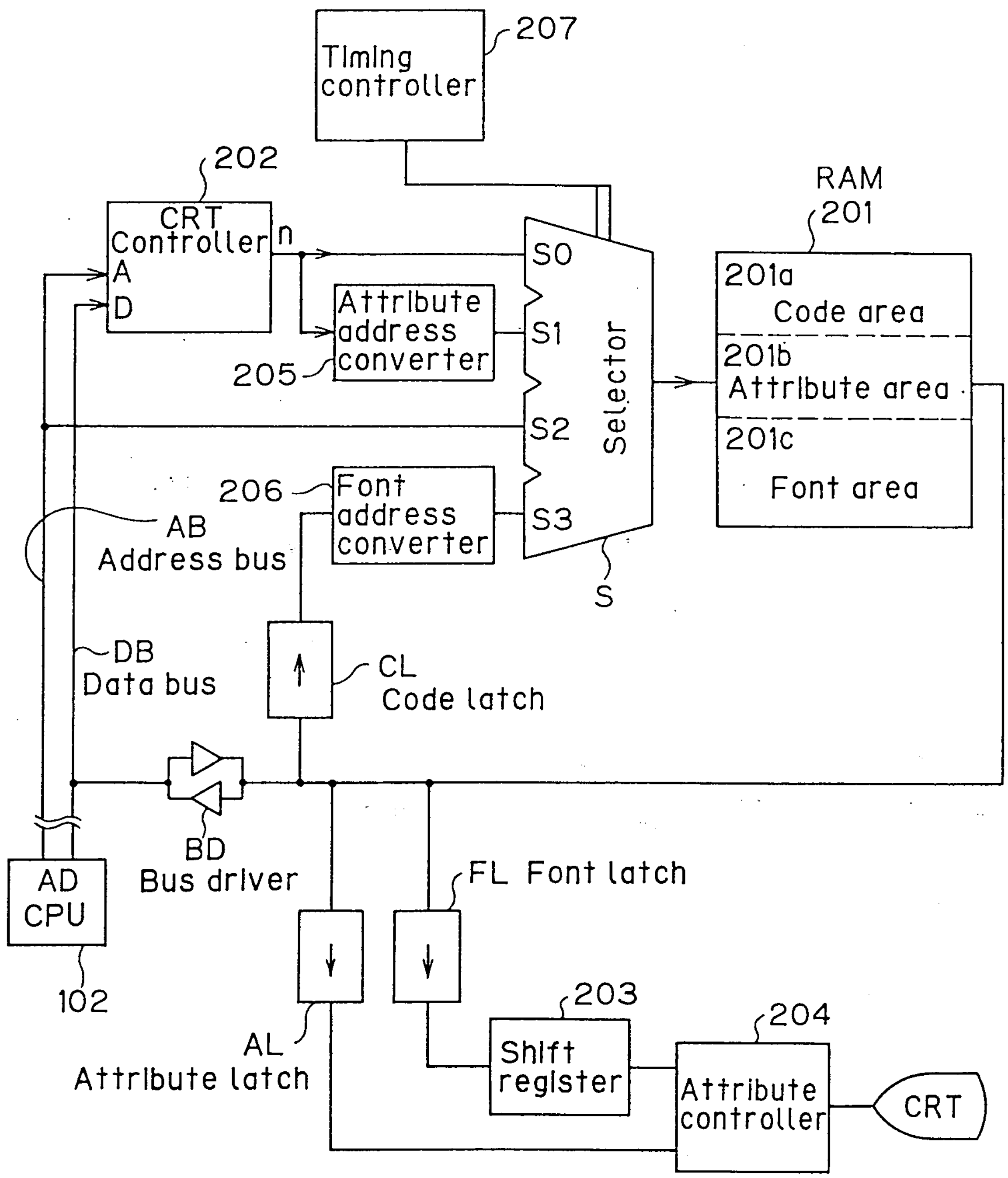
207
Timing controller
202
CRT Controller
n
A
D
RAM
201
201a
Code area
201b
Attribute area
201c
Font area
Attribute address converter
205
S0
S1
S2
S3
Selector
S
206
Font address converter
AB
Address bus
DB
Data bus
CL
Code latch
BD
Bus driver
AD
CPU
102
FL Font latch
AL
Attribute latch
203
Shift register
204
Attribute controller
CRT

Fig.12

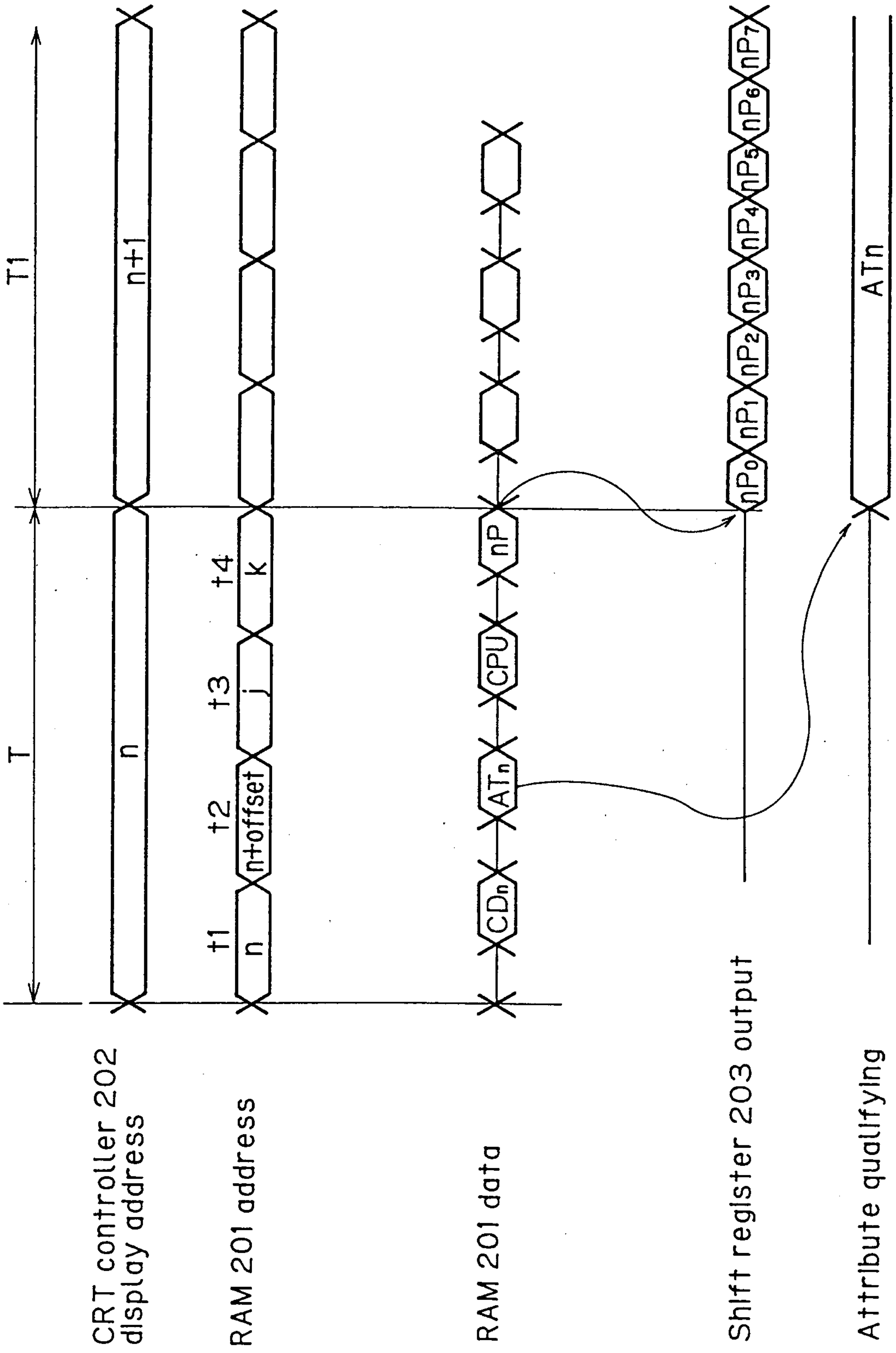
CRT controller 202
display address
RAM 201 address
RAM 201 data
Shift register 203 output
Attribute qualifying
T
T1
t1
t2
t3
t4
n
n+1
n+offset
j
k
CDn
ATn
CPU
nP
nP0
nP1
nP2
nP3
nP4
nP5
nP6
nP7
ATn

Fig.13

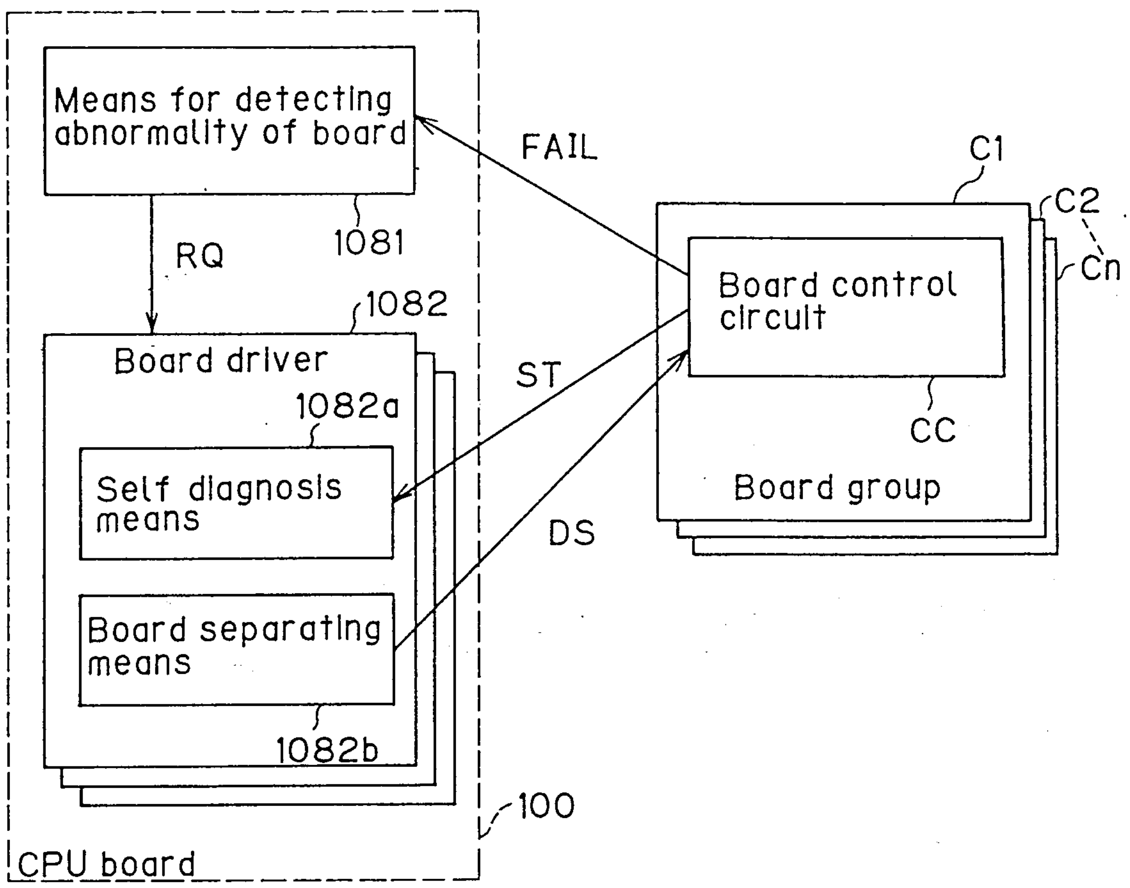
Means for detecting abnormality of board
1081
RQ
FAIL
C1
C2
Cn
Board control circuit
CC
Board group
1082
Board driver
1082a
Self diagnosis means
ST
DS
Board separating means
1082b
100
CPU board

Fig.14

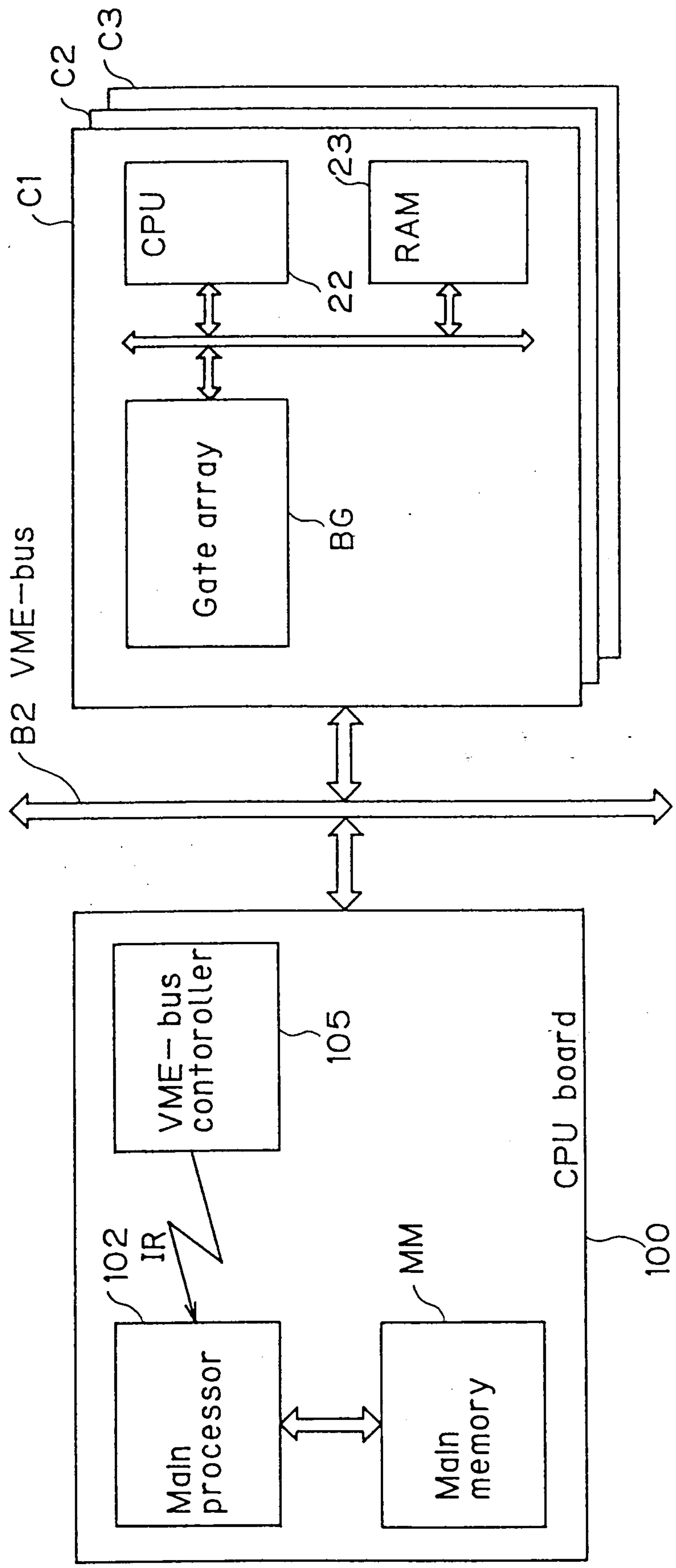
C1
C2
C3
CPU
22
RAM
23
Gate array
BG
B2 VME-bus
VME-bus contoroller
105
CPU board
100
102
IR
MM
Main processor
Main memory

Fig.15

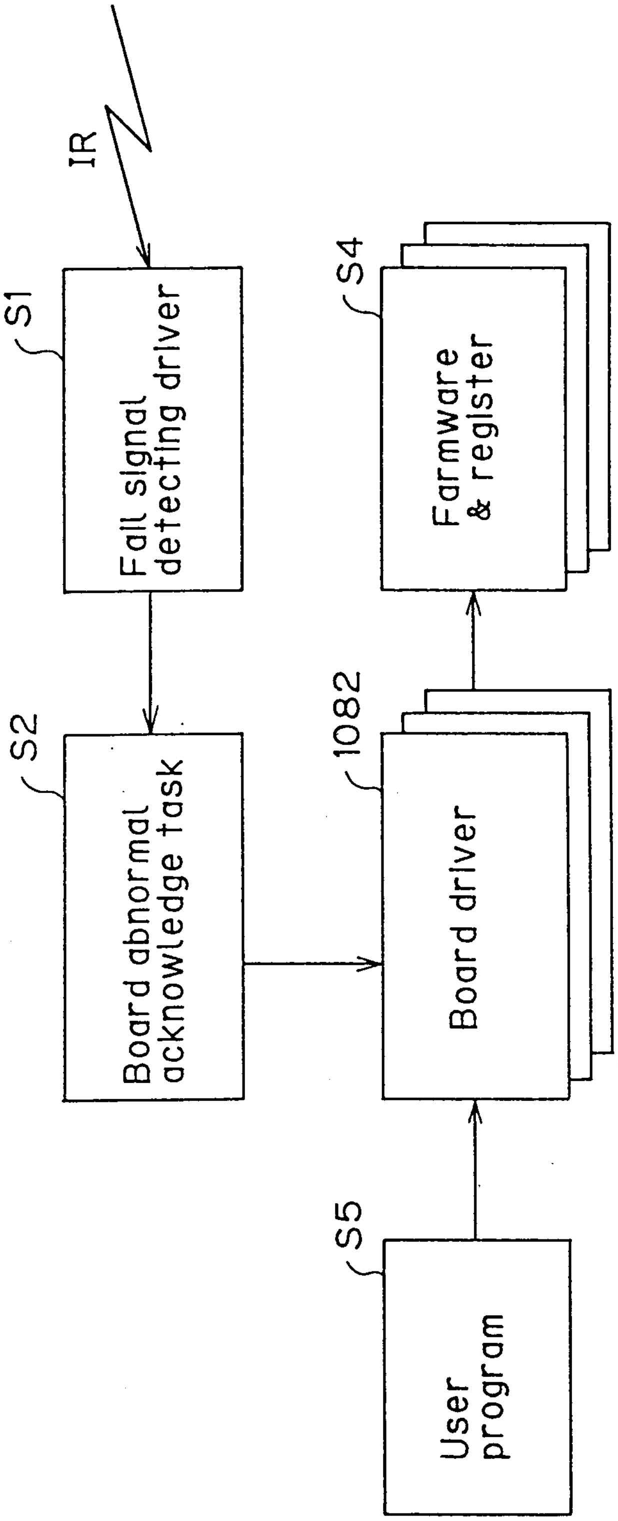
IR
S1
Fail signal detecting driver
S2
Board abnormal acknowledge task
S4
Farmware & register
1082
Board driver
S5
User program

Fig.16

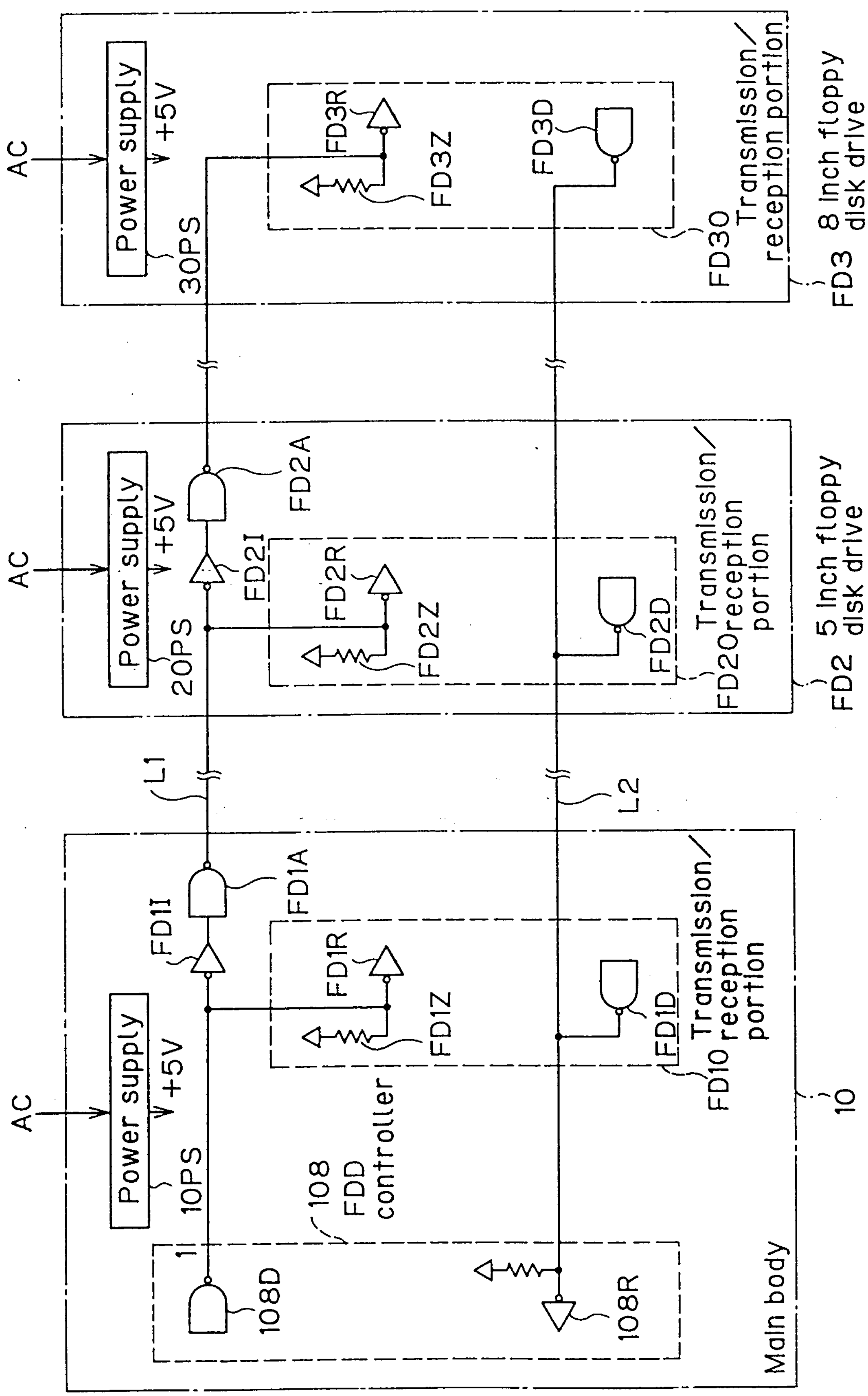
AC
Power supply
+5V
10PS
20PS
30PS
108
FDD
controller
108D
108R
Main body
10
FD1I
FD1A
FD1R
FD1Z
FD1D
FD10
Transmission/
reception
portion
L1
L2
FD2I
FD2A
FD2R
FD2Z
FD2D
FD20
FD2
5 inch floppy
disk drive
FD3R
FD3Z
FD3D
FD30
FD3
8 inch floppy
disk drive

Fig.17

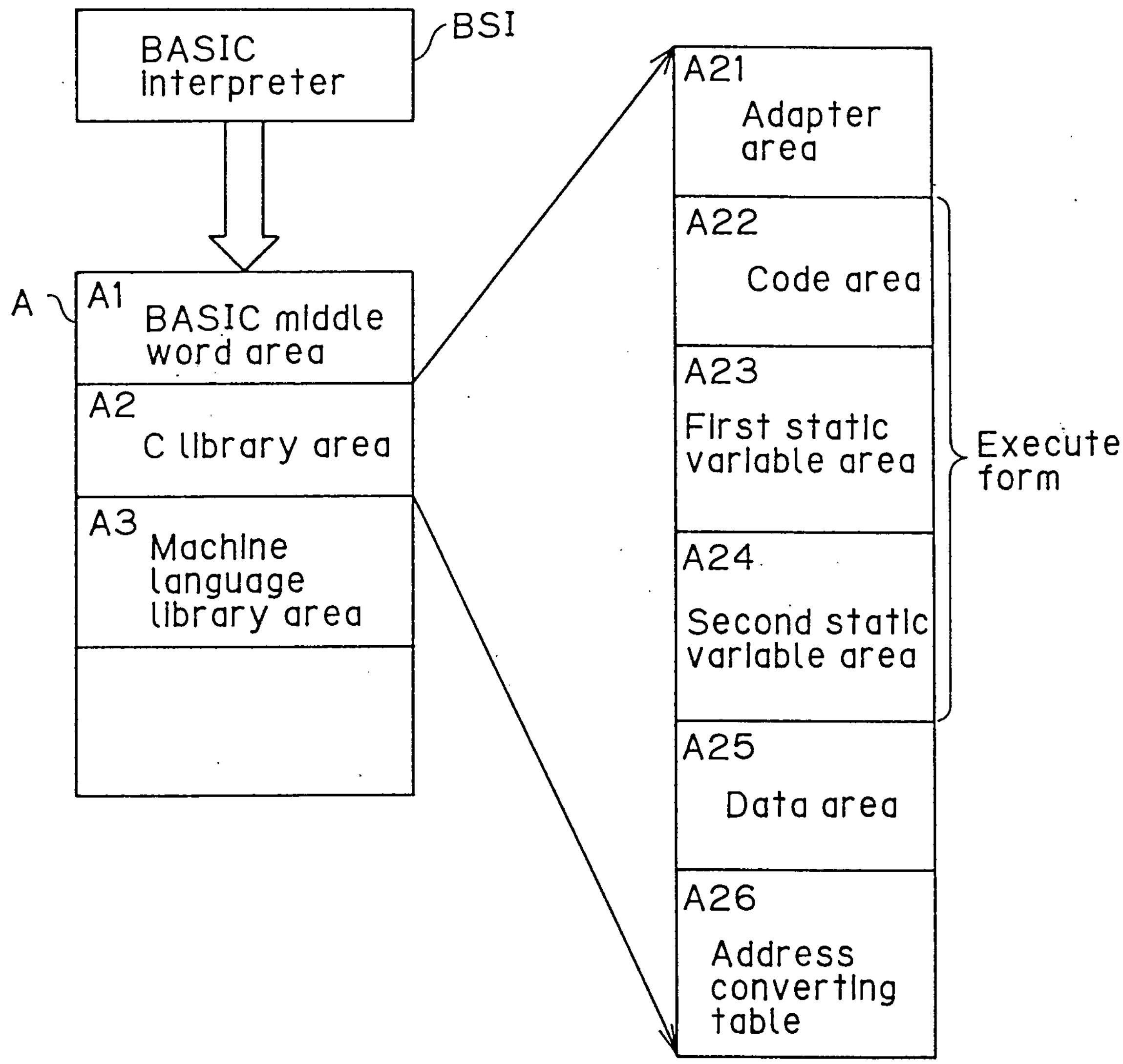
BASIC interpreter
BSI
A
A1 BASIC middle word area
A2 C library area
A3 Machine language library area
A21 Adapter area
A22 Code area
A23 First static variable area
A24 Second static variable area
A25 Data area
A26 Address converting table
Execute form

Fig.18

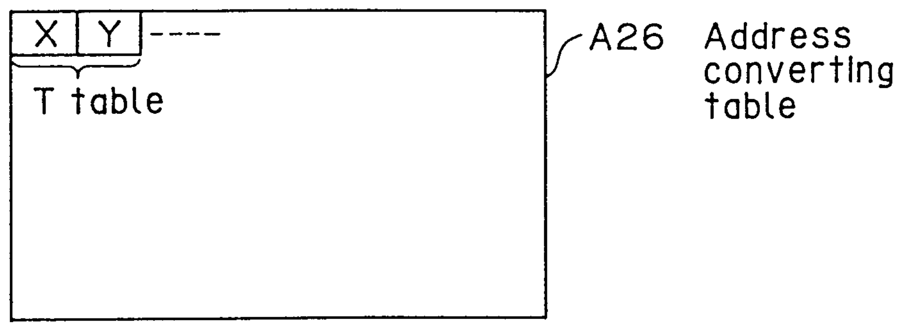
X
Y
T table
A26
Address converting table

Fig.19

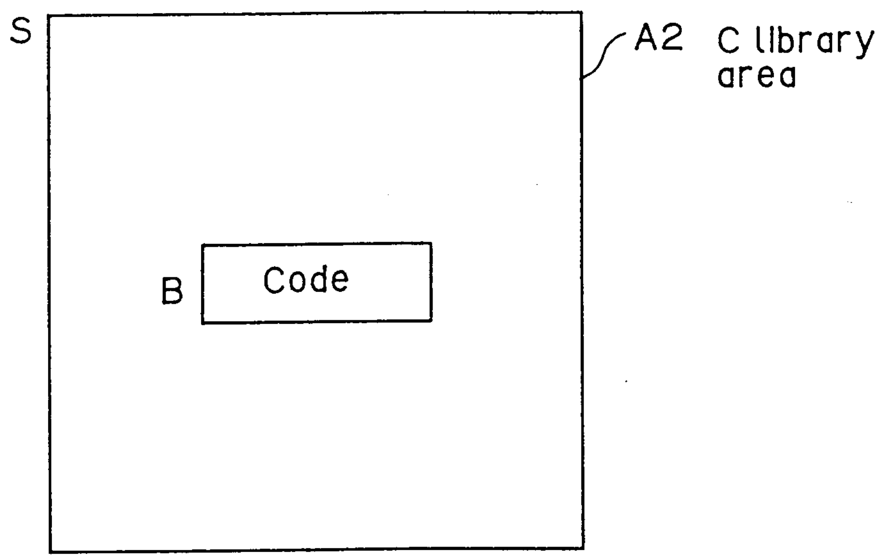
S
A2
C library area
B
Code

Fig.20

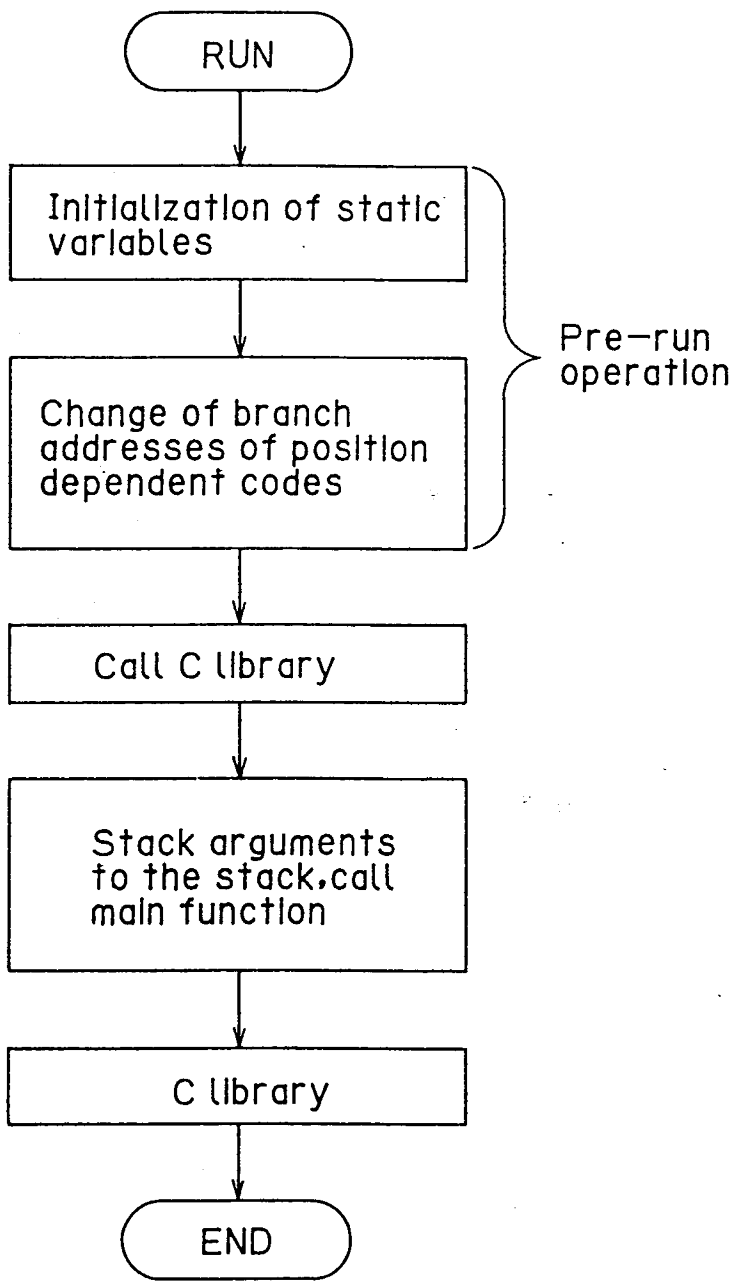
RUN
Initialization of static variables
Change of branch addresses of position dependent codes
Pre-run operation
Call C library
Stack arguments to the stack,call main function
C library
END